# EUROPEAN PATENT APPLICATION

(11) **EP 3 815 510 A1**
(43) Date of publication of application: **05.05.2021**
(21) Application number: 19206661.1
(22) Date of filing: 31.10.2019
(51) Int. Cl.: A01G 3/08, A01D 46/30, A01B 39/18, A01B 41/06, A01M 21/02, A01B 41/04, A01B 41/02, A01B 39/19

(54) **PLANT REMOVAL APPARATUS AND METHOD**

(71) Applicant: Dahlia Robotics GmbH, 82402 Seeshaupt (DE)
(72) Inventor: STEINER, Helmut, 89407 Dillingen an der Donau (DE); BOGLINO, Giovanni, 82402 Seeshaupt (DE); STEINER, Torsten, 81249 Muenchen (DE)
(74) Representative: Samson & Partner Patentanwälte mbB

(57) **Abstract**

It is disclosed a plant removal apparatus for removing or at least reducing plant from an agricultural terrain, the apparatus comprising a plant detection (12) device, at least one of a removal device of a first type (118) and plant removal device of a second type (10), and a control device, as well as a method for removing or at least reducing plant from an agricultural terrain

## Description

### Technical Field

The present invention relates to robotic systems and, particularly, to robotic systems for agriculture.

### Background

With a view on agricultural produces, one may distinguish between useful plants and non-useful plants in terms of an agricultural produce to be obtained. For example, if wheat is the agricultural produce to be obtained, any other plant growing on the same agricultural terrain can be considered as non-useful plants. An example to the latter is weed. Comparable scenarios can be found any cultivation of, for example, crop, trees, flowers etc. Further, useful plants can turn into non-useful plants if, e.g. during the cultivation process useful plants do not develop satisfactorily.

Generally, the term non-useful plant refers to a plant that should be removed among a useful plant.

Known techniques for removal of non-useful plants include manual removal and the application of herbicides as well as machine-supported removal. The latter includes removal of non-useful plants by means of a robotic system.

### Summary

A plant removal apparatus for removing or at least reducing plant from an agricultural terrain is disclosed.

The apparatus may comprise:
- a plant detection device comprising
   -- a pattern recognition part being adapted to detect plants, to discriminate a plant to be removed among the detected plants and to output plant identification data indicating the plant to be removed, and
   -- a plant position detection part being adapted to detect positions of plants detected by the pattern recognition part and to output plant position data indicating positions of the detected plants;
   the apparatus further comprising at least one of
- at least one plant removal device of a first type, comprising
   -- a spinning wire arrangement comprising a spinning wire and first rotatable shaft for rotating the spinning wire, the spinning wire being coupled to the first rotatable shaft;
   -- a spinning wire drive being operatively coupled to the first rotatable shaft and being adapted to controllably rotate the first rotatable shaft;
   -- a first positioning device being operatively coupled to the first rotatable shaft and being adapted to position the spinning wire arrangement in at least one translational degrees of freedom and in at least one rotational degree of freedom; and
- at least one plant removal device of a second type, comprising
   -- a drill arrangement comprising a drill and second rotatable shaft for rotating the drill, the drill being coupled to the second rotatable shaft;
   -- a drill drive being operatively coupled to the second rotatable shaft and being adapted to controllably rotate the second rotatable shaft;
   -- a second positioning device being operatively coupled to the second rotatable shaft and being adapted to position the drill arrangement in at least one translational degrees of freedom;
   the apparatus further comprising
- a control device being operatively coupled to and being adapted to control the at least one plant removal device of a first type and the at least one plant removal device of a second type, the control device being adapted to process output of the plant detection device to obtain plant removal data identifying plant to be removed and a removal position of identified plant to be removed, to selectively activate at least one of the at least one plant removal device of a first type and the at least one plant removal device of a second type for removal of the identified plant to be removed at the removal position.

The first positioning device and the second positioning device may be integrally formed to provide a common positioning device for the at least one plant removal device of a first type and the plant removal device of a second type.

The first positioning device may be the second positioning device, and vice versa. For example, a positioning device may be provided that serves as both the first positioning device and the second positioning device.

The apparatus may comprise a plant removal device of a first type and a plant removal device of a second type comprising to a common positioning device serving both the first positioning device and the second positioning device.

The apparatus may comprise two or more plant removal devices of a first type comprising (sharing) a common first positioning device.

The apparatus may comprise two or more plant removal devices of a first type each comprising an individual first positioning device.

The apparatus may comprise two or more plant removal devices of a second type comprising (sharing) a common second positioning device.

The apparatus may comprise two or more plant removal devices of a second type each comprising an individual second positioning device.

The apparatus may comprise at least two removal device of a first type being arranged in parallel with respect to a movement direction of the apparatus.

The apparatus may comprise at least two removal device of a second type being arranged in parallel with respect to a movement direction of the apparatus.

The apparatus may comprise at least one removal device of a first type and at least one removal device of a second type being arranged in parallel with respect to a movement direction of the apparatus.

The apparatus may comprise at least two removal device of a first type being arranged in series with respect to a movement direction of the apparatus.

The apparatus may comprise at least two removal device of a second type being arranged in series with respect to a movement direction of the apparatus.

The apparatus may comprise at least one removal device of a first type and at least one removal device of a second type being arranged in series with respect to a movement direction of the apparatus.

The apparatus may comprise at least two removal devices of a first type and at least two removal devices of a second type, wherein at least one removal device of a first type and at least one removal device of a second type are arranged in parallel with respect to a movement direction of the apparatus and wherein at least one removal device of a first type and at least one removal device of a second type are arranged in series with respect to a movement direction of the apparatus.

The apparatus may comprise a base device comprising a support frame.

The base device may comprise a movement device being adapted to move the plant removal apparatus with respect to the agricultural terrain.

The movement device may comprise at least one driven wheel.

The movement device may comprise at least one leg connecting the at least one driven wheel with the support frame.

The at least one leg may include at least one actuator for controlling a length of the leg.

The movement device may comprise at least one suspension arrangement.

The movement device may comprise a first leg and a second leg, wherein the suspension arrangement is coupled between the first leg and the second leg.

The suspension arrangement may be a mechanical suspension arrangement comprising a first suspension arm having a first end connected to the first leg, second suspension arm having a first end connected to the second leg, and an intermediate suspension arm, wherein a second end of the first suspension arm is coupled with a first end of the intermediate suspension arm and a second end of the second suspension arm is coupled with a second end of the intermediate suspension arm, and wherein the intermediate suspension arm is rotatably coupled to the support frame.

The first positioning device may comprise at least one of
- a first horizontal movement device being adapted to move the at least one plant removal device in a first horizontal direction,
- a second horizontal movement device being adapted to move the at least one plant removal device in a second horizontal direction,
- a vertical movement device being adapted to move the at least one plant removal device in a vertical direction,
- a first rotational movement device being adapted to rotate the at least one plant removal device in a first rotational direction,
- a second rotational movement device being adapted to rotate the at least one plant removal device in a second rotational direction.

The first horizontal direction may be perpendicular to the second horizontal direction.

The first horizontal direction may be perpendicular to a rotation axis of the first rotational direction.

The second horizontal direction may be perpendicular to a rotation axis of the first rotational direction.

The vertical direction may be parallel to a rotation axis of the first rotational direction.

The vertical direction may be perpendicular to a rotation axis of the second rotational direction.

The vertical direction may be perpendicular to a plane defined by the first horizontal direction and the horizontal direction.

At least one of the first horizontal direction and the second horizontal direction may be perpendicular to a spinning plane of the spinning wire.

A plane defined by a rotation axis the first rotational direction and a rotation axis the second rotational direction may be parallel to a spinning plane of the spinning wire.

A plane defined by a rotation axis the first rotational direction and a rotation axis the second rotational direction may be inclined with respect to a spinning plane of the spinning wire.

A rotation axis of the first rotational direction may be perpendicular to a rotation axis of the second rotational direction.

The first rotational direction may be in a plane parallel to a plane defined by the first horizontal direction and the second horizontal direction.

The second rotational direction may be in a plane perpendicular to a plane defined by the first horizontal direction and the second horizontal direction.

A plane defined by a rotation axis of the first rotational direction and a rotation axis of the second rotational direction may be parallel to a spinning plane of the spinning wire.

A plane defined by a rotation axis of the first rotational direction and a rotation axis of the second rotational direction may be inclined with respect to a spinning plane of the spinning wire.

The first horizontal movement device may comprise a linear rail arrangement with a controllably movable slide.

The linear rail arrangement of the first horizontal movement device may extend, in the first horizontal direction, beyond the support frame.

The second horizontal movement device may comprise linear rail arrangement with a controllably movable slide.

The linear rail arrangement of the second horizontal movement device may extend, in the second horizontal direction, beyond the support frame.

The vertical movement device may comprise at least one of
- a hydraulic actuator,
- a pneumatic actuator,
- a rail-belt arrangement driven by an electric motor.

The vertical movement device may comprise a Delta structure.

The Delta structure may comprise at least two arms. At one end, arms are respectively connected at two separate locations on a common base (plate). The other ends of the arms are connected with each other to provide connection for an end effector, which here would be one of the plant removal devices of the first and/or second types. The arms can be actuated and moved so that the end effector connection and, hence, the plant removal device connected thereto can be moved and/or positioned to remove plants.

The vertical movement device may comprise a shear arrangement.

The vertical movement device may comprise an arrangement comprising a piston and a cylinder, wherein the piston is coupled to a piston rod being coupled to a drive wheel.

The first rotational movement device may comprise an electric motor adapted to output rotational movement in the first rotational direction.

The second rotational movement device may comprise an electric motor adapted to output rotational movement in the second rotational direction.

The spinning wire may comprise at least one of metal, plastic, reinforced fiber, and the like.

A free end of the spinning wire may be reinforced, particularly may comprise an end cap or clamp.

The at least one plant removal device of a first type may comprise
- a spinning wire protection device having at least one protection surface being arranged in a plane parallel to the spinning plane of the spinning wire.

The spinning wire protection device may comprise
- a first protection surface and a second protection surface being arranged in parallel to the first protection surface, wherein, the spinning wire is arranged at least partially in a space between the first protection surface and the second protection surface.

The first protection surface and the second protection surface may have the same shape, for example, circular, semi-circular, rectangular.

At least one of the first protection surface and the second protection surface may be formed such and have shape, respectively, so that the spinning plane of the spinning wire at least partially extends beyond thereof.

The spinning wire protection device may comprise
- a curved protection surface arranged between the first protection surface and the second protection surface, wherein the curved protection surface, the first protection surface and the second protection surface form a spinning wire housing for the spinning wire.

The spinning wire housing may be formed such that the spinning plane of the spinning wire at least partially extends out of the spinning wire housing.

The second positioning device may be further adapted to position the drill arrangement in at least one rotational degree of freedom.

The first positioning device may comprise at least one of
- a first horizontal movement device being adapted to move the at least one plant removal device in a first horizontal direction,
- a second horizontal movement device being adapted to move the at least one plant removal device in a second horizontal direction,
- a vertical movement device being adapted to move the at least one plant removal device in a vertical direction,
- a first rotational movement device being adapted to rotate the at least one plant removal device in a first rotational direction,
- a second rotational movement device being adapted to rotate the at least one plant removal device in a second rotational direction.

The first horizontal direction may be perpendicular to the second horizontal direction.

The first horizontal direction may be perpendicular to a rotation axis of the first rotational direction.

The second horizontal direction may be perpendicular to a rotation axis of the first rotational direction.

The vertical direction may be parallel to a rotation axis of the first rotational direction.

The vertical direction may be perpendicular to a rotation axis of the second rotational direction.

The vertical direction may be perpendicular to a plane defined by the first horizontal direction and the horizontal direction.

At least one of the first horizontal direction and the second horizontal direction may be perpendicular to a rotation axis of the drill.

A plane defined by the first rotational and the second rotational direction may be perpendicular to a rotation axis of the drill.

A plane defined by the first rotational direction and the second rotational direction may be inclined with respect to a rotation axis of the drill.

A rotation axis of the first rotational direction may be perpendicular to a rotation axis of the second rotational direction.

A rotation axis of the first rotational movement may be parallel to a rotation axis of the drill.

The first rotational direction may be in a plane parallel to a plane defined by the first horizontal direction and the second horizontal direction.

The second rotational direction may be in a plane perpendicular to a plane defined by the first horizontal direction and the second horizontal direction.

A rotation axis of the second rotational direction may be perpendicular to a rotation axis of the drill.

A plane defined by a rotation axis of the first rotational direction and a rotation axis of the second rotational direction may be parallel to a rotation axis of the drill.

A plane defined by a rotation axis of the first rotational direction and a rotation axis of the second rotational direction may be inclined with respect to a rotation axis of the drill

The first horizontal movement device may comprise linear rail arrangement with a controllably movable slide.

The linear rail arrangement of the first horizontal movement device may extend, in the first horizontal direction, beyond the support frame.

The second horizontal movement device may comprise linear rail arrangement with a controllably movable slide.

The linear rail arrangement of the second horizontal movement device may extend, in the second horizontal direction, beyond the support frame.

The vertical movement device may comprise at least one of:
- a hydraulic actuator,
- a pneumatic actuator,
- a rail-belt arrangement driven by an electric motor.

The vertical movement device may comprise a Delta structure.

The Delta structure may comprise at least two arms. At one end, arms are respectively connected at two separate locations on a common base (plate). The other ends of the arms are connected with each other to provide connection for an end effector, which here would be one of the plant removal devices of the first and/or second types. The arms can be actuated and moved so that the end effector connection and, hence, the plant removal device connected thereto can be moved and/or positioned to remove plants.

The vertical movement device may comprise a shear arrangement.

The vertical movement device may comprise an arrangement comprising a piston and a cylinder, wherein the piston is coupled to a piston rod being coupled to a drive wheel.

The first rotational movement device may comprise an electric motor adapted to output rotational movement in the first rotational direction.

The second rotational movement device may comprise an electric motor adapted to output rotational movement in the second rotational direction.

The drill of the at least one plant removal device of a second type may be configured to be moved, while the drill is activated, in at least one of a direction parallel to a longitudinal axis of the drill and a direction perpendicular to a longitudinal axis of the drill.

The drill may be a 3D drill or a miller.

The drill may be comprise at least one of a cutter configured for cutting action for a movement of the drill along its longitudinal axis and a cutter configured for cutting action for a movement of the drill perpendicular and/or oblique with respect to its longitudinal axis.

The drill may be a wing-type drill having movable wings that deploy in dependence of a rotation of the drill.

The drill may comprise drum having a surface with a plurality of cutters.

The at least one plant removal device of a first type may comprise
- a drill protection device having at least one protection surface extending in parallel to a longitudinal axis of the drill.

The drill protection device may comprise at least one of
- a tube,
- a flexible screen, particularly comprising a plurality of chains, wires and the like,
- a screen having u-shaped profile, particularly comprising a u-shaped beams, preferably comprising metal.

The drill protection device may be formed such that at least one free end of the drill at least partially extends out of the drill protection device.

The plant detection device may comprise at least one of
- an optical sensor,
- a mechanical sensor,
- a contact sensor,
- a speed sensor,
- a gyroscope,
- a camera, preferably a 3D camera,
- a laser detection and/or ranging device,
- a distance sensor device using at least one of infrared radiation, ultrasound, laser radiation,
- an odometry sensor device,
- a device adapted to use a satellite based positioning system,
- an inertial measurement unit (IMU),
- an air pressure sensor,
- a ground sampling device being adapted to take samples from the agricultural terrain,
- a ground parameter measurement sensor being adapted to measure one or more parameters associated to the agricultural terrain, particularly temperature, humidity, soil nutrients (e.g. nitrogen, potassium, phosphate and their salts), soil organic matter,
- an ultra-sonic sensor.

The plant detection device may be arranged at at least one of the at least one plant removal device of a first type, the at least one plant removal device of a second type, the base device, at least one of the movement device.

The pattern recognition part may comprise at least one of
- an optical sensor,
- a mechanical sensor,
- a contact sensor,
- a speed sensor,
- a gyroscope,
- a camera, preferably a 3D camera,
- a laser detection and/or ranging device,
- a distance sensor device using at least one of infrared radiation, ultrasound, laser radiation,
- an odometry sensor device,
- a device adapted to use a satellite based positioning system,
- an inertial measurement unit (IMU),
- an air pressure sensor,
- a ground sampling device being adapted to take samples from the agricultural terrain,
- a ground parameter measurement sensor being adapted to measure one or more parameters associated to the agricultural terrain, particularly temperature, humidity, soil nutrients (e.g. nitrogen, potassium, phosphate and their salts), soil organic matter, ...,
- an ultra-sonic sensor.

The pattern recognition part may be arranged at at least one of the at least one plant removal device of a first type, the at least one plant removal device of a second type, the base device, the movement device.

The plant position detection part may comprise at least one of
- an optical sensor,
- a mechanical sensor,
- a contact sensor,
- a speed sensor,
- a gyroscope,
- a camera, preferably a 3D camera,
- a laser detection and/or ranging device,
- a distance sensor device using at least one of infrared radiation, ultrasound, laser radiation,
- an odometry sensor device,
- a device adapted to use a satellite based positioning system,
- an inertial measurement unit (IMU),
- an air pressure sensor,
- a ground sampling device being adapted to take samples from the agricultural terrain,
- a ground parameter measurement sensor being adapted to measure one or more parameters associated to the agricultural terrain, particularly temperature, humidity, soil nutrients (e.g. nitrogen, potassium, phosphate and their salts), soil organic matter,...,
- an ultra-sonic sensor.

The plant position detection part may be arranged at at least one of the at least one plant removal device of a first type, the at least one plant removal device of a second type, the base device, the movement device.

The apparatus may further comprising a performance monitoring device being adapted to obtain plant removal performance data indicative of the plant removal performance of at least one of the at least one plant removal device of a first type and the at least one plant removal device of a second type when being activated.

The performance monitoring device may comprise at least one of
- an optical sensor,
- a mechanical sensor,
- a contact sensor,
- a speed sensor,
- a gyroscope,
- a camera, preferably a 3D camera,
- a laser detection and/or ranging device,
- a distance sensor device using at least one of infrared radiation, ultrasound, laser radiation,
- an odometry sensor device,
- a device adapted to use a satellite based positioning system,
- an inertial measurement unit (IMU),
- an air pressure sensor,
- a ground sampling device being adapted to take samples from the agricultural terrain,
- a ground parameter measurement sensor being adapted to measure one or more parameters associated to the agricultural terrain, particularly temperature, humidity, soil nutrients (e.g. nitrogen, potassium, phosphate and their salts), soil organic matter,...,
- an ultra-sonic sensor.

The performance monitoring device may be arranged at at least one of the at least one plant removal device of a first type, the at least one plant removal device of a second type and the base device.

The plant identification data may include at least one of
- data indicating a useful plant,
- data indicating to a plant to be removed,
- data indicating to a plant not to be removed
- data indicating pest and/or disease of a plant,
- data indicating a nutrients deficiency of a plant,
- data indicating a soil condition of the agricultural terrain,
- data indicating a vegetation condition for a plant, like wetness, frost, snow coverage,
- data indicating roots of a plant,
- data indicating at least one constituent of a plant, particularly at least one of a stem, a leaf, a foliage,
- data indicating at least one missing constituent of a plant.

The plant position data may include at least one of
- a geographical position of a plant,
- a position of a plant in relation to a reference location for the agricultural terrain,
- a position of a plant in relation to the plant removal apparatus,
- a position of a plant in relation to another plant,
- a width of a plant,
- a height of a plant,
- a position of a stem of a plant,
- a center of a plant,
- ground entering location where plant stem enters ground,
- sun exposure data indicating at least one part of a plant being exposed to (sun) light,
- shading data indicating at least one part of a plant being exposed to shade,
- a drill target location indicating a part of a plant where the drill should contact the plant,
- a spinning wire target location indicating a part of a plant where the spinning wire should contact the plant.

The plant removal data may include at least one of the data indicated above for the plant identification data and/or the plant position data.

The plant removal performance data may include at least one of
- position of the at least one plant removal device of a first type
- position of the at least one plant removal device of a second type,
- position of the spinning wire, particularly its free end,
- position of the drill, particularly its drill tip
- distance between, on the one hand, at least one of the at least one plant removal device of a first type and the at least one plant removal device of a second type and, on the other hand, plant to be removed,
- distance between, on the one hand, at least one of the at least one plant removal device of a first type and the at least one plant removal device of a second type and, on the other hand, plants to be not removed,
- distance between, on the one hand, at least one of the spinning wire, particularly its free end, and the drill, particularly its drill tip, and, on the other hand, plant to be removed,
- distance between, on the one hand, at least one of the spinning wire, particularly its free end, and the drill, particularly its drill tip, and, on the other hand, plants to be not removed,
- objects being affected by at least one of activation, positioning and operation of at least one of the at least one plant removal device of a first type and the at least one plant removal device of a second type,
- dust resulting from at least one of activation, positioning and operation of at least one of the at least one plant removal device of a first type and the at least one plant removal device of a second type,
- flying debris resulting from at least one of activation, positioning and operation of at least one of the at least one plant removal device of a first type and the at least one plant removal device of a second type,
- speed of the plant removal apparatus,
- spinning speed of the spinning wire,
- rotational speed of the drill,
- translational movement of the spinning wire arrangement,
- rotational movement of the spinning wire arrangement,
- translational movement of the drill arrangement,
- rotational movement of the drill arrangement,
- at least one of a position and translational movement of the first horizontal movement device,
- at least one of a position and translational movement of the second horizontal movement device,
- at least one of a position, translational movement and rotational movement of the vertical movement device,
- a direction in which the apparatus is moving,
- a speed of movement of the apparatus,
- species of plant to be removed,
- species of plant not to be removed.

The plant removal apparatus may further comprise a communication device for at least one of sending data to and receiving data from a remote location.

The communication device comprises at least one of
- a device using 3GPP communication,
- a Bluetooth device,
- a near field communication device,
- a radio communication device,
- light emitting communication device,
- sound emitting communication device,
- vibration emitting communication device,
- infrared communication device.

The plant removal apparatus may further comprise an energy source device for supplying energy to at least one of the plant detection device, the at least one plant removal device of a first type, the at least one plant removal device of a second type, the control device, the performance monitoring device, the movement device and the communication device.

The energy source device comprises at least one of
- a battery,
- a combustion engine,
- a solar panel,
- a hydrogen powered engine,
- a wind turbine,
- a window foil/sail.

The control device may be further adapted to control at least one of the pattern recognition device, the plant position detection device, the movement device, the plant removal performance monitoring device, the communication device and the energy source.

The control device may be adapted to control the selective activation of at least one of the at least one plant removal device of a first type and the at least one plant removal device of a second type in dependence of at least one of the plant identification data, the plant position data, the plant removal data and the plant removal performance data.

The control device may be adapted to control the first positioning device to position a spinning plane of the spinning wire perpendicular to a spinning wire reference plane.

The spinning wire reference plane may be a plane essentially parallel to an upper surface of the agricultural terrain.

The spinning wire reference plane may be a plane extending obliquely with respect to an upper surface of the agricultural terrain.

The spinning wire reference plane may be defined in relation to a plant, particularly a stem of a plant, a location where a stem of plant enters ground, a center of a plant.

The control device may by adapted to control the first positioning device to position the spinning wire protection device between a plant not to be removed and the spinning plane of the spinning wire.

The control device may be adapted to control the second positioning device to position a rotation plane of the drill parallel to a drill reference plane.

The drill reference plane may be a plane essentially parallel to an upper surface of the agricultural terrain.

The drill reference plane may be a plane extending obliquely with respect to an upper surface of the agricultural terrain.

The drill reference plane may be defined in relation to a plant, particularly a stem of a plant, a location where a stem of plant enters ground, a (estimated) center of a plant.

Further, a plant removal method of removing or at least reducing plant from an agricultural terrain is disclosed.

The method may be carried out by using a plant removal apparatus comprising at least one of a first plant removal device and a second plant removal device, the method comprising:
- detecting plants on the agricultural terrain,
- discriminating a plant to be removed among the detected plants,
- outputting plant identification data indicating the plant to be removed,
- detecting positions of plants detected,
- outputting plant position data indicating positions of the detected plants,
- selectively activating at least one of a first plant removal device and a second plant removal device for removal of the identified plant to be removed at the removal position, wherein
- the plant removal device of a first type comprises
   -- a spinning wire arrangement comprising a spinning wire and first rotatable shaft for rotating the spinning wire, the spinning wire being coupled to the first rotatable shaft;
   -- a spinning wire drive being operatively coupled to the first rotatable shaft and being adapted to controllably rotate the first rotatable shaft;
   -- a first positioning device being operatively coupled to the first rotatable shaft and being adapted to position the spinning wire arrangement in at least one translational degrees of freedom and in at least one rotational degree of freedom; and
- the plant removal device of a second type comprises
   -- a drill arrangement comprising a drill and second rotatable shaft for rotating the drill, the drill being coupled to the second rotatable shaft;
   -- a drill drive being operatively coupled to the second rotatable shaft and being adapted to controllably rotate the second rotatable shaft;
   -- a second positioning device being operatively coupled to the second rotatable shaft and being adapted to position the drill arrangement in at least one translational degrees of freedom.

The method may include moving the plant removal apparatus with respect to the agricultural terrain.

The method may comprise at least one of
- moving the at least one of the plant removal device of a first type and the plant removal device of a second type in a first horizontal direction,
- moving the at least one plant removal device in a second horizontal direction,
- moving the at least one plant removal device in a vertical direction,
- rotating the at least one plant removal device in a first rotational direction,
- rotating the at least one plant removal device in a second rotational direction.

The first horizontal direction may be perpendicular to the second horizontal direction.

The first horizontal direction may be perpendicular to a rotation axis of the first rotational direction.

The second horizontal direction may be perpendicular to a rotation axis of the first rotational direction.

The vertical direction may be parallel to a rotation axis of the first rotational direction.

The vertical direction may be perpendicular to a rotation axis of the second rotational direction.

The vertical direction may be perpendicular to a plane define by the first horizontal direction and the horizontal direction.

At least one of the first horizontal direction and the second horizontal direction may be perpendicular to a spinning plane of the spinning wire.

A spinning plane of the spinning wire may be perpendicular to a plane defined by the first horizontal axis and the second horizontal axis.

A plane defined by a rotation axis of the first rotational direction and a rotation axis of the second rotational direction may be parallel to a spinning plane of the spinning wire.

A plane defined by the first rotational direction and the second rotational direction may be inclined with respect to a spinning plane of the spinning wire.

A rotation axis of the first rotational direction may be perpendicular to a rotation axis of the second rotational direction.

The first rotational direction may be in a plane parallel to a plane defined by the first rotational direction and the second rotational direction.

The second rotational direction may be in a plane perpendicular to a plane defined by the first horizontal direction and the second horizontal direction.

A plane defined by a rotation axis of the first rotational direction and a rotation axis of the second rotational direction may be parallel to a spinning plane of the spinning wire.

A plane defined by a rotation axis of the first rotational direction and a rotation axis of the second rotational direction may be inclined with respect to a spinning plane of the spinning wire.

The method may comprise moving the drill of the plant removal device of a second type, while the drill is activated, in at least one of a direction parallel to a longitudinal axis of the drill and a direction perpendicular to a longitudinal axis of the drill.

The method may comprise moving the spinning wire of the plant removal device of a first type, while the spinning wire is activated, in at least one of a direction parallel to a spinning plane of the spinning wire and a direction perpendicular to a spinning plane of the spinning wire.

The method may comprise obtaining plant removal performance data indicative of the plant removal performance of at least one of the at least one plant removal device of a first type and the at least one plant removal device of a second type when being activated.

Further, a computer program product comprising program code configured to, when executed by a computing device, to carry out plant removal steps as set forth above is disclosed.

### Brief description of the drawings

Fig.1 schematically illustrates an exemplary plant removal apparatus.
Fig. 2 schematically illustrates an exemplary support frame for a base device for a plant removal apparatus.
Fig. 3 schematically illustrates an exemplary base device including parts (e.g. legs) of an exemplary movement device.
Fig. 4 schematically illustrates an exemplary adjustable leg having an adjustable length.
Fig. 5 schematically illustrates an exemplary suspension arrangement.
Fig. 6 schematically illustrates an exemplary base device including further parts (e.g. wheels) of an exemplary movement device.
Fig. 6A schematically illustrates exemplary steerable wheels.
Fig. 7 schematically illustrates an exemplary base device including an exemplary energy source device.
Fig. 8 schematically illustrates an exemplary base device including an exemplary plant removal device of a second type (e.g. drill type).
Fig. 9 schematically illustrates an exemplary base device including exemplary plant detection and performance monitoring devices.
Fig. 10 schematically illustrates an exemplary base device including a further exemplary energy source device comprising, e.g., a solar panel.
Fig. 11 schematically illustrates an exemplary plant removal device of a second type (e.g. drill type).
Fig. 12 schematically illustrates an exemplary actuator for a positioning device (e.g. plunger-driven actuator).
Fig. 13 schematically illustrates a further exemplary actuator for a positioning device (e.g. shear-like actuator).
Fig. 14 schematically illustrates an exemplary drill for a plant removal device of a second type.
Fig. 15 schematically illustrates examples of exemplary drill actions and arrangements.
Fig. 16 schematically illustrates a further example of an exemplary drill arrangement comprising one or more sensors that may be retractable.
Fig. 17 schematically illustrates an exemplary plant removal device of a first type (e.g. spinning wire type).
Fig. 18 schematically illustrates further examples of exemplary spinning wire arrangements.
Fig. 19 schematically illustrates an example of an exemplary plant removal device integrally comprising a plant removal device of a first type (particularly with spinning wire arrangement) and a plant removal device of a second type (e.g. drill type arrangement).
Fig. 20 schematically illustrates an exemplary drive arrangement for examples of Fig. 19.

Generally, parts, components, features illustrated in the drawings having essential the same or comparable functions, characteristics and the like have the same reference numeral. Reference numerals already shown in a drawing may not be completely included and repeated, respectively, in the following drawings.

Further, any disclosure in respect to an example, part, component, feature etc. also applies to any other examples, parts, components, features etc., unless noted otherwise.

Moreover, any disclosure made in the following applies generally to all drawings, examples, parts, components, features etc., unless otherwise noted and/or reference is made to a specific drawing, example, part, component, feature etc.

### Detailed description

In the following, examples of the present disclosure and exemplary parts and components thereof, respectively, are described with reference to the drawings.

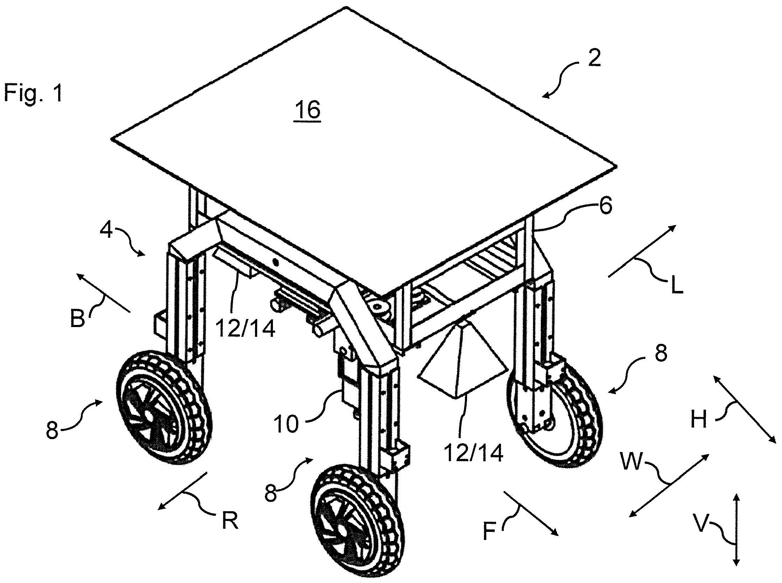

Fig. 1 schematically illustrates an exemplary plant removal apparatus 2 comprising, inter alia, a base device 4 having a support frame 6 and movement devices 8, a plant removal device of a second type 10, plant detection 12 and performance monitoring 14 devices, and energy source devices 16.

Generally, plant removal apparatuses according to the present disclosure are intended to be operated on agricultural terrain on which plants are grown, cultivated etc. for removing, among the plants that intentionally grown, cultivated etc., other unwanted plants.

Examples of an agricultural terrain include, for example:
- Corn/grain field, e.g. for wheat, maize/corn, oats, bran, rice, millet, rye, barley
- Tree nursery
- flower growing field, bed, patch and the like
- vegetables fields
- sugar beet fields
- fruit (e.g. strawberries) fields
- vineyards
- golf courses

Further, in the case of thinning, e.g. reducing the density of plants and/or removing not properly growing plants, among useful plants some of them are removed.

Fig. 1 further illustrates three direction, namely directions H, V and W. It should be noted that the term "direction" may include not only the direction as such but also a respective opposite direction. For example, a reference to direction H may indicate the direction H or a direction opposite to direction H or combinations thereof.

Directions H, V and W are respectively defined in relation to a plant removal device. However, directions H, V and W are also related to movements of the plant removal apparatus 2 and an agricultural terrain the plant removal apparatus is used on, respectively.

As explained further down below, a plant removal device can move in a translational or forward movement direction F and/or in opposite direction (backward movement direction B) on an agricultural terrain, which is the direction the plant removal device usually moves for/during operation on the agricultural terrain. Generally, it is assumed that the translational movement direction F is parallel to the longitudinal extension (length) of the plant removal apparatus and corresponds to direction H, and is perpendicular to the width extension (width) of the plant removal apparatus and, thus, perpendicular to direction W. It is noted that a longitudinal extension (length) of a plant removal apparatus may be shorter or longer as a width extension (width) of the plant removal apparatus or may be the same.

As explained further down below, a plant removal device can move in a transverse or lateral/side movement direction on an agricultural terrain, which is the direction generally perpendicular to the translational movement of the plant removal device. As illustrated, there are a sideway movement to the right direction R and sideway movement to the left direction L (For the sake of completeness, it is already mentioned here that the plant removal apparatus can move also in directions having components in the translational direction and in the transverse direction. For example, the plant removal apparatus can not only move straight ahead or sideway, but also in directions obliquely extending to the translational direction or the transverse direction including curved directions.) Generally, it is assumed that the transversal movement direction is perpendicular to the longitudinal extension (length) of the plant removal apparatus and, thus, perpendicular to direction H, and is parallel to the width extension (width) of the plant removal apparatus and corresponds to direction W.

As explained further down below, a plant removal device can move in up/down direction with respect to the current agricultural terrain. Generally, it is assumed that the up/down direction is parallel to the height extension (height) of the plant removal device and corresponds to direction V.

Direction H is referred to as horizontal direction and indicates directions perpendicular to the height extension of a plant removal apparatus and parallel to the longitudinal extension of the plant removal app. Assuming an agricultural terrain having an essentially flat surface a plant removal apparatus is used on, direction H essentially extend parallel to the agricultural terrain.

Direction V is referred to as vertical direction and indicates directions parallel to the height extension the plant removal apparatus and perpendicular to the longitudinal extension of the plant removal app. Assuming an agricultural terrain having an essentially flat surface a plant removal apparatus is used on, direction V essentially extend perpendicular to the agricultural terrain.

Direction W is referred to as horizontal direction and indicates directions perpendicular to the height extension of the plant removal apparatus and parallel to the longitudinal extension of the plant removal app. Assuming an agricultural terrain having an essentially flat surface a plant removal apparatus is used on, direction W essentially extends parallel to the agricultural terrain.

For differentiation between direction H and direction W, direction H is also referred to as first horizontal direction and direction W is also referred to as the second horizontal direction.

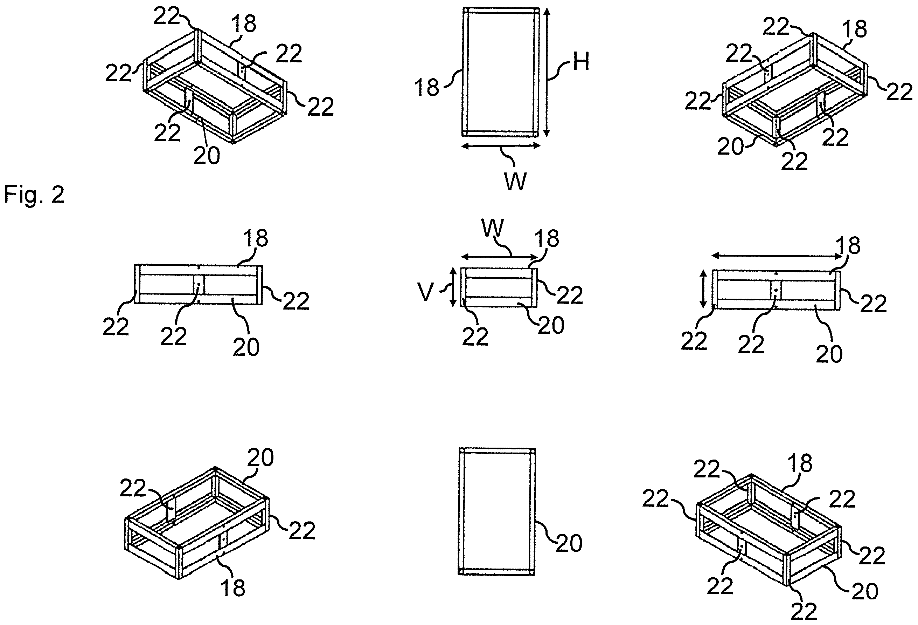

Fig. 2 schematically illustrates an exemplary support frame 6 of a base device 4 for a plant removal apparatus. The support frame 6 includes an upper frame 18 that is referred to as upper frame 18 as it is located, in direction H, above a lower frame 20. Upper frame 18 and lower frame 20 are connected with each by intermediated bars extending in direction V.

The support frame 6 serves as support member on/at which components of a plant removal apparatus may be attached.

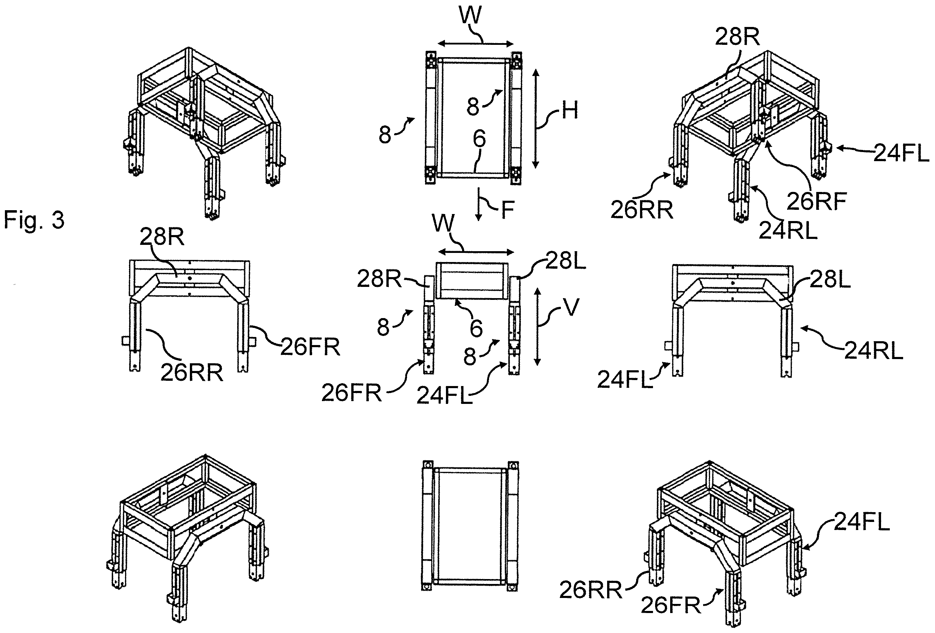

Fig. 3 illustrates the support frame 6 of Fig. 2 and parts of a movement device 8 for a plant removal apparatus, particularly legs of a movement device 8. In the illustrated examples of the drawings, four legs 24FL, 24RL, 26FR and 26 RR are assumed. However, further exemplary movement devices may comprise three legs, which may enhance manoeuvrability (e.g. smaller turning circle) and/or stability for stationary positions of a plant removal apparatus (e.g. during plant removal action with moving the plant removal device), however, may result in smaller stability when the plant removal apparatus is moving. Further exemplary movement devices may comprise more than four legs, e.g., five legs (e.g. with a single front leg in the middle of the width of a plant removal apparatus for enhance step/climbing performance), six legs (e.g. three legs at each side), etc.

The legs can respectively include a device for turning, e.g. a lower part of the leg (particularly, a rotation about a leg's longitudinal axis), by means of which a wheel (see description further below) can be steered.

Front left leg 24FL is referred to front left side leg as it is located at the left of the front of the base device 4 with respect to forward movement F.

Rear left leg 24RL is referred to rear left side leg as it is located at the left of the rear of the base device 4 with respect to forward movement F.

Front right hand leg 26FR is referred to front right side leg as it is located at the right of the front of the base device 4 with respect to forward movement F.

Rear right leg 26RR is referred to rear right side leg as it is located at the right of the rear of the base device 4 with respect to forward movement F.

Legs may be directly attached to the support frame 6 or, as illustrated, by a leg connection structure. In the drawings, a left leg connection structure 28L is used to connect front left leg 24FL and rear left leg 24RL with each other and a right leg connection structure 28R is used to connect front right leg 26FR and rear right leg 26RR with each other.

In some examples, the connections structures are used to connect the respective legs and the support frame 6. For example, the left leg connection structure 28L and the right leg connection structure 28R may be rigidly connected to the support frame 6.

In other examples, particularly those using a suspension arrangement as described in the following, leg connections structures are not connected with the support frame 6 or are moveably coupled with the support frame. For example, a leg connection structures may be pivotally coupled to the support frame 6 by a link/joint 34.

The length of at least one leg is adjustable in its longitudinal extension, i.e., according to the drawings in direction V. In further examples, the length of two or more legs is adjustable.

The following observations in this respect to front right leg 26FR also apply to the other legs.

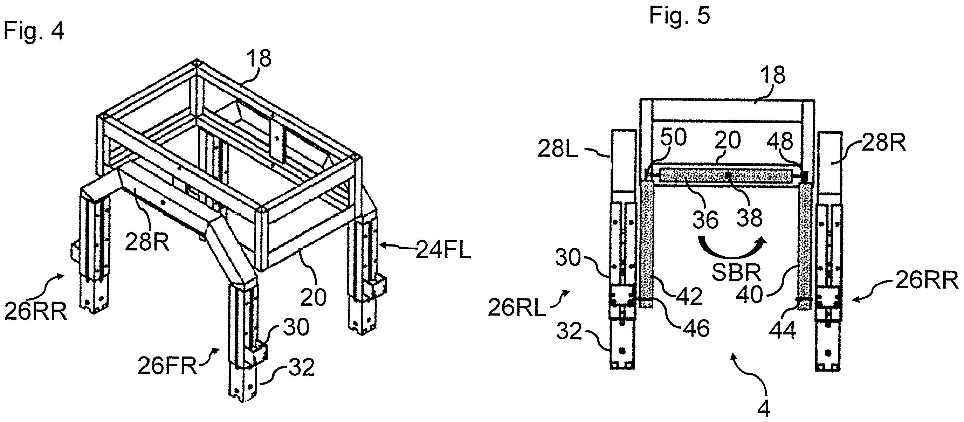

As illustrated in Fig. 4, front right leg 26FR comprises an upper leg part 30 and a lower leg part 32.

In some examples, the lower leg part 32 is releasable connected to the upper leg part 30 and it can be replaced by at least one other lower leg apart having a different length so that the overall length of the leg can be adjusted.

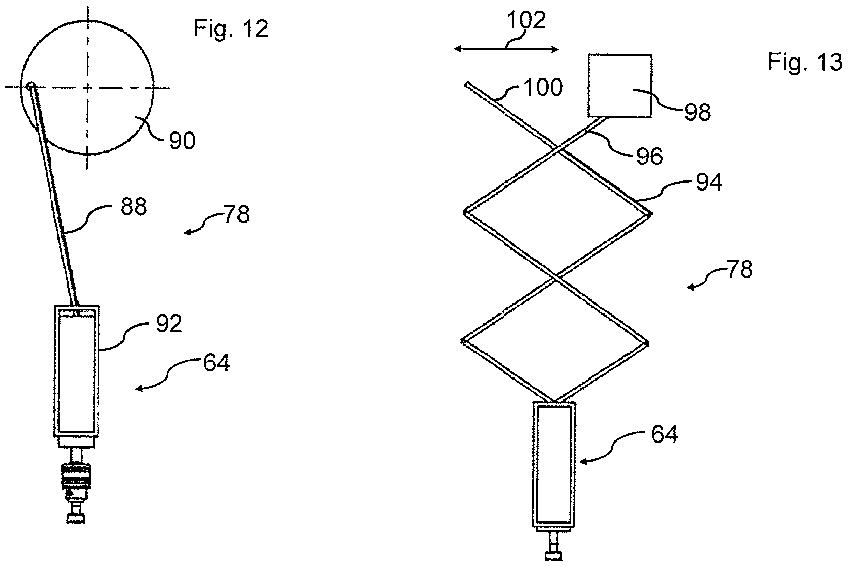

In other examples, the upper leg part 30 and the lower leg part 32 are connected movably with respect to each other so that without exchanging the lower leg part 32 of the overall length of the like can be adjusted. To this end, one or more actuators in at least one of the upper leg part 30 and the lower leg part 32 can be moved with respect to each other. Possible actuators include piezoelectric actuator(s), pneumatic actuator(s), hydraulic actuator(s), electric motor(s), etc. Also, a shear arrangement as explained with reference to Fig. 13 can be used as actuator.

In yet further examples, at least two legs, preferably all four legs include a mechanism for steering wheels of the plant removal apparatus. For example, an upper leg part 30 and a lower leg part are rotatable, about the leg's longitudinal axis, with respect to each other. In that manner, at least two, preferably all wheels of the plant removal apparatus can be steered so that the plant removal apparatus can be moved forward, backward, to the right, and to the left, as well as perform sideways movement and in-place turning, including any combination thereof.

As part of the movements devices, a suspension arrangement as illustrated in Figs. 5 may be used. Figs. 5 illustrate a suspension arrangement on, with respect to the forward movement direction F, the rear side of a plant removal apparatus. A suspension arrangement on, with respect to the forward movement direction F, the front side of a plant removal apparatus can be provided in addition. Also, examples may include a suspension arrangement on just at the front.

The exemplary suspension arrangement includes a swivel bar 36 being connected to the support frame 6 and, as illustrated, at the lower frame 20 by means of a joint or hinge 38 providing a swivel bar rotation axis for the swivel bar 36. According to the drawings, the swivel bar rotation axis extends in the first horizontal direction H. The swivel bar 36 can rotate with respect to the swivel bar rotation axis, i.e. according to the drawings in clockwise and anticlockwise directions as indicated by arrows SBR.

The suspension arrangement 34 further comprises a right suspension leg 40 and a left suspension leg 42.

The right suspension leg 40 is coupled with a respective leg of the base device, here rear right leg 26RR, by means of a joint or hinge 44 at a lower end of the right suspension leg 40. The joint/hinge 44 provides suspension leg rotation axis for the lower end of the right suspension leg 40. According to the drawings, the suspension leg rotation axis for the lower end of the right suspension leg 40 extends in the second horizontal direction W. In other words, the right suspension leg 40 can rotate with respect to the rear right leg 26RR in a plane perpendicular to the drawing plane of Fig. 5.

The left suspension leg 42 is coupled with a respective leg of the base device, here rear left leg 24RL, by means of a joint or hinge 46 at a lower end of the right suspension leg 42. The joint/hinge 46 provides a suspension leg rotation axis for the lower end of the left suspension leg 42. According to the drawings, the suspension leg rotation axis for the lower end of the left suspension leg 42 extends in the second horizontal direction W. In other words, the left suspension leg 42 can rotate with respect to the rear left leg 24RL in a plane perpendicular to the drawing plane of Fig. 5.

The right suspension leg 40 is coupled with the swivel bar 36 by means of a joint or hinge 48 at an upper end of the right suspension leg 40. The joint/hinge 48 provides a suspension leg at least one rotation axis for the upper end of the right suspension leg 40. Preferably, joint/hinge 48 provides three rotational degrees of freedom. According to the drawings, the suspension leg rotation axis for the upper end of the right suspension leg 40 extends in the second horizontal direction W. In other words, the upper end of the right suspension leg 40 can rotate with respect to the swivel bar 36 in a plane perpendicular to the drawing plane of Fig. 5.

The left suspension leg 42 is coupled with the swivel bar 36 by means of a joint or hinge 50 at an upper end of the left suspension leg 42. The joint/hinge 50 provides a suspension leg at least one rotation axis for the upper end of the left suspension leg 42. Preferably, joint/hinge 50 provides three rotational degrees of freedom. According to the drawings, the suspension leg rotation axis for the upper end of the left suspension leg 42 extends in the second horizontal direction W. In other words, the upper end of the left suspension leg 42 can rotate with respect to the swivel bar 36 in a plane perpendicular to the drawing plane of Fig. 5.

As noted above, in examples having a suspension arrangement, the legs of the movement devices may be not coupled to the support frame 6 by means of leg connections structures. In such examples, the connection to the support frame 6 is provided by the suspension arrangement. As also noted above, the leg connections structures may be pivotably coupled to the support frame. In such examples, the leg connections structures move together with legs using the suspension arrangement.

In the illustrated example, the rear left leg 24RL and the rear right leg 26RR are coupled to the support frame 6 by the suspension arrangement. If applicable, the same may apply to the front left leg 24FL and the front right leg 26FR, which may be coupled to the support frame 6 by means of a suspension arrangement that can be constructed as the suspension arrangement.

Due to the rotations axes provided by the joints/hinges 38, 44, 46, 48 and 50, the rear left leg 24RL and the rear right leg 26RR can move with respect to the support frame 6 so that an uneven surface of agricultural terrain can be compensated with.

In such examples, the legs can also move out of the plane defined by the direction V and the direction H (in the drawings, out of the drawing plane), e.g. rotate about direction W.

In any example with suspension arrangement, the suspension arrangement(s) compensate(s) uneven surface a plant removal apparatus is placed and moving, respectively.

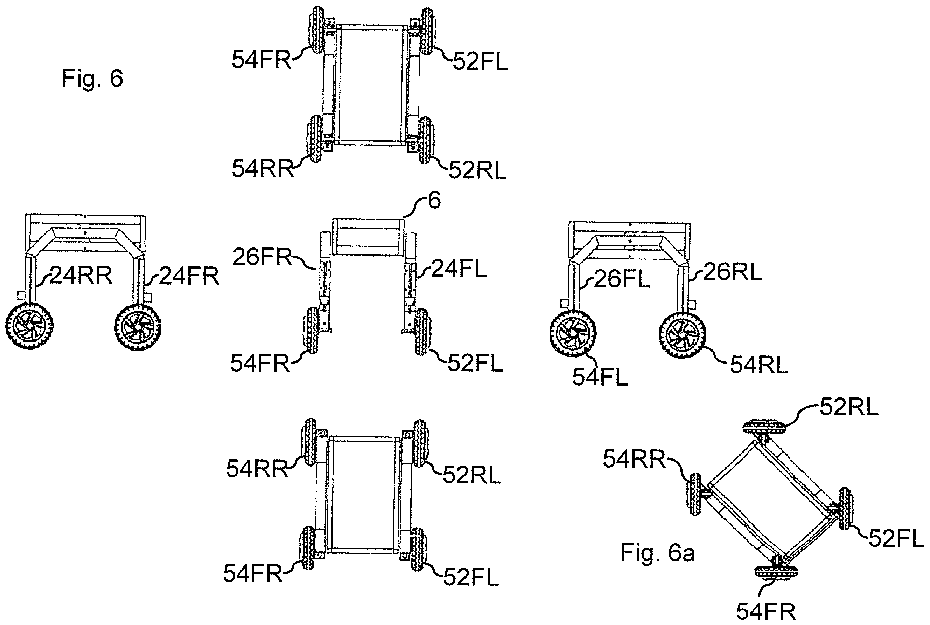

Fig. 6 schematically illustrates an exemplary base device including, as further exemplary parts, wheels of a movement device 8.

According to the drawings, one wheel per leg is provided, namely a front left wheel 52FL at the front left leg 24FL, a rear left wheel 52RL at the rear left leg 24RRRL, a front right wheel 52LRFR at the front right leg 24FR, and a rear right wheel 52RR at the rear right leg 24RR.

The above observations with respect to the number of possible legs, also apply here the number of wheels. That is, exemplary plant removal devices may comprise, depending on the number of legs, three, four, five etc. wheels (or wheel pairs).

In some examples, one or more of the wheels are equipped with an electric wheel hub motor. For example, in two-wheel-drive examples, two of the wheels (e.g. front or rear wheels) respectively have an electric wheel hub motor, while in four-wheel-drive examples, four of the wheels (e.g. front and rear wheels) have respectively an electric wheel hub motor.

At least two of the wheels may be steerable in order to control the direction of motion of a plant removal apparatus. For example, like in other vehicles the two front wheels, i.e. the front left wheel and the front right wheel may be steerable. However, in order to allow for a higher degree of movability, including movements in all directions (i.e. forward, backward, to the right, to the left, sideway movement, in-place turning and any combination thereof), all wheels are steerable. This is illustrated in Fig. 6A.

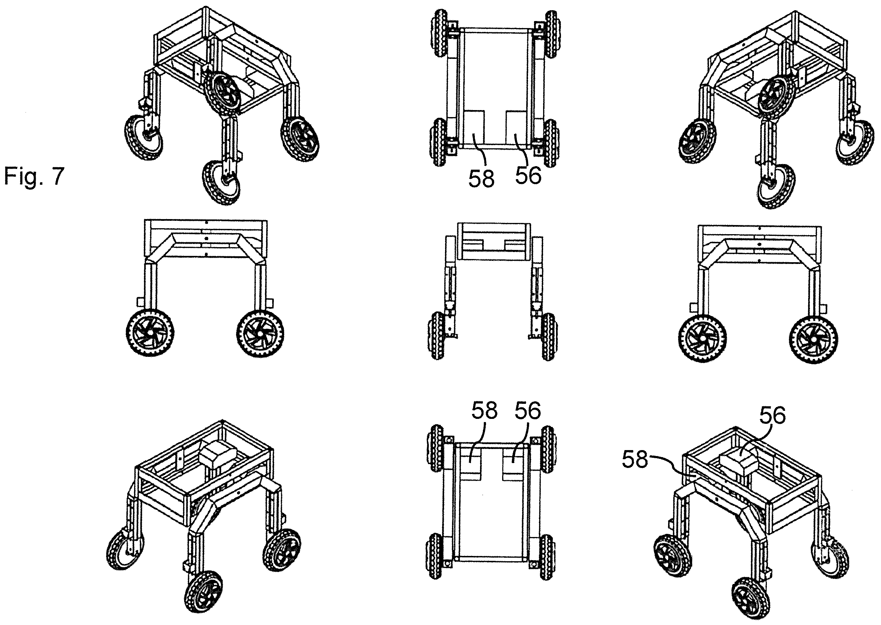

Fig. 7 schematically illustrates an exemplary base device including an exemplary energy source device 16. According to the illustration, a first battery and/or accumulator 56 and a second battery and/or accumulator 58 are provided.

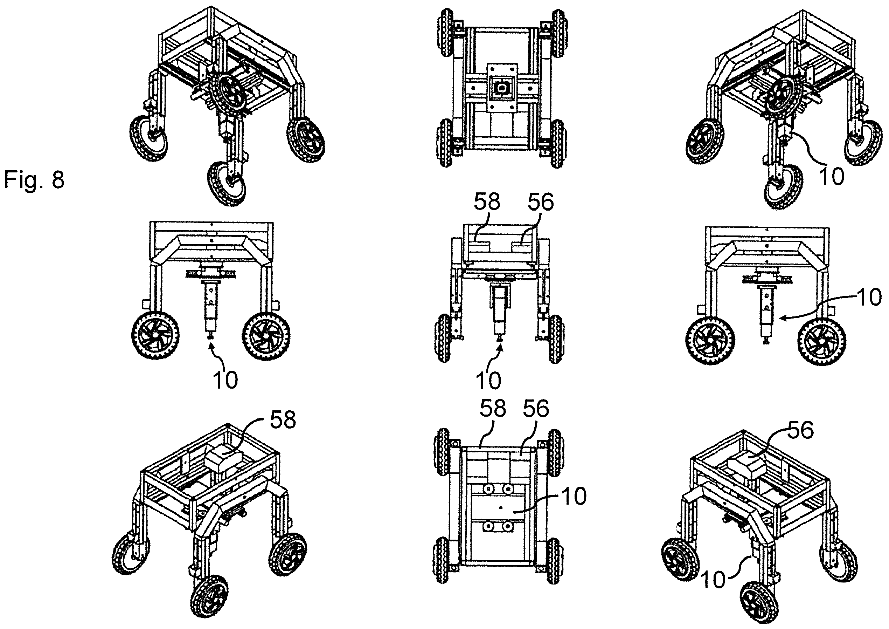

Fig. 8 schematically illustrates an exemplary base device including an exemplary plant removal device of a second type 10, namely a plant removal device 10 having a drill arrangement, which will be described in further details further below. In further examples, a plant removal apparatus may comprise more than one plant removal device of a second type, or at least one plant removal device of a first type (particularly of the type having a spinning wire arrangement), or at least one plant removal device of a first type and at least one plant removal device of a second type.

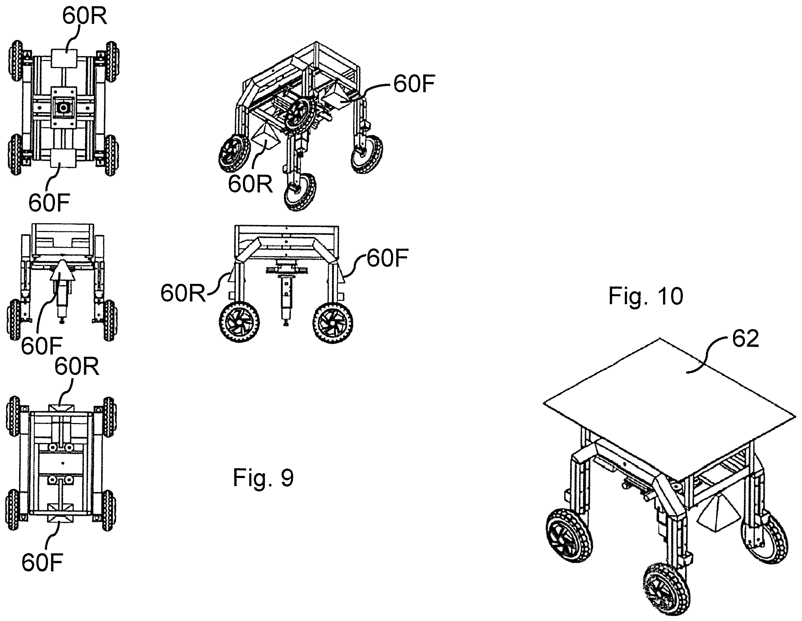

Fig. 9 schematically illustrates an exemplary base device including exemplary plant detection and performance monitoring devices 12/14. In the drawings, the plant detection device and the performance monitoring device are shown as integrally formed devices. This is due to the assumption that at least some of their components can be shared. For example, components acquiring optical information (cameras, sensors, etc.) can be used by both the plant detection device and the performance monitoring device.

However, functionally the plant detection device and the performance monitoring device are different parts of a plant removal apparatus. The plant detection device serves to identify plants that are to be removed. The performance monitoring device serves to monitor a plant removal process and provide information on the effectiveness, outcome etc. thereof.

With a view on its functionalities, the plant detection device also includes different parts, namely a pattern recognition part and a plant position detection part. In the drawings, the pattern recognition part and the plant position detection part are treated as integrally formed devices. However, function-wise they are distinct.

Namely, the pattern recognition part is adapted to detect plants, to discriminate a plant to be removed among the detected plants and to output plant identification data indicating the plant to be removed, while the plant position detection part is adapted to detect positions of plants detected by the pattern recognition part and to output plant position data indicating positions of the detected plants.

In Fig. 9, front plant detection and performance monitoring devices 60F and rear plant detection and performance monitoring devices 60R are provided. In further examples, just plant detection and performance monitoring devices at the front or at the back are provided.

In further examples, at least one plant detection device may be provided at the left side and/or the right side. In yet further examples, at least one performance monitoring device may be provided at the left side and/or the right side.

Fig. 10 schematically illustrates an exemplary base device including a further exemplary energy source device 16, particularly in the form of a solar panel 62. The solar panel 62 may be adapted to supply energy to the batteries/accumulators 56 and 58, from which any energy sink of a plant removal apparatus may obtain energy, and/or directly to any energy sink of the plant removal apparatus.

Further, the solar panel 62 may serve as protective cover for any part of a plant removal apparatus arranged below the solar panel 62.

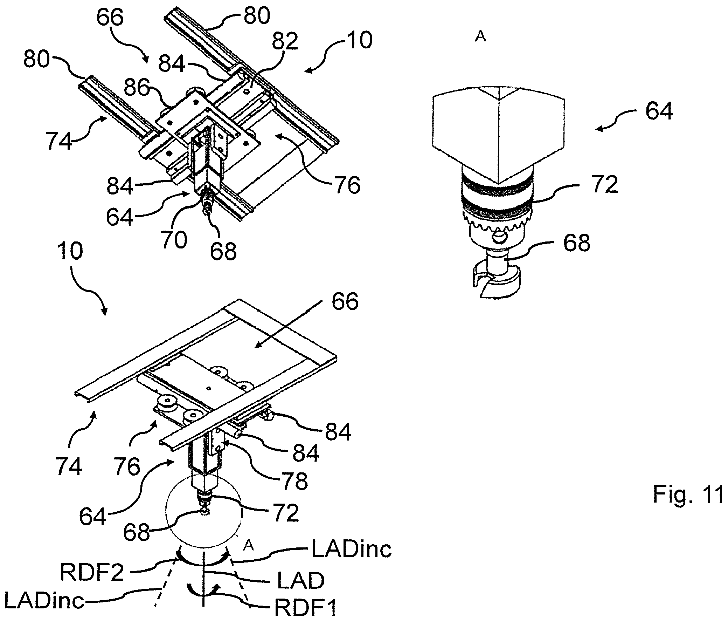

Fig. 11 schematically illustrates an exemplary plant removal device of a second type 10, particularly a plant removal device 10 including a drill arrangement 64 and a positioning device 66.

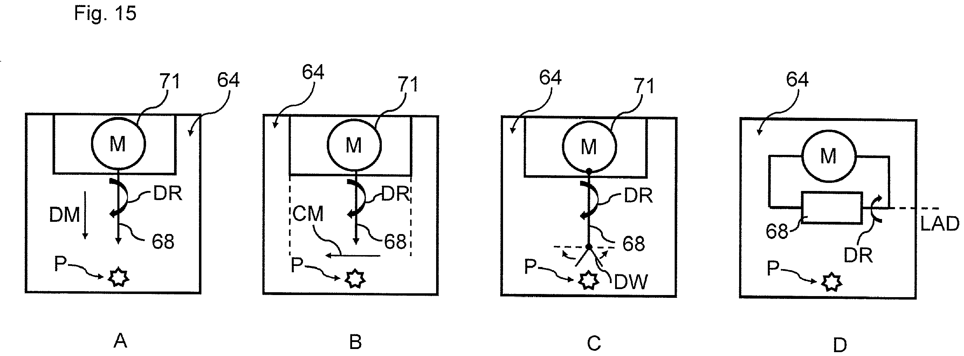

The drill arrangement 64 comprises a drill 68 coupled to a rotatable shaft 70 that is connected to a drill drive 71 (s. e.g. Fig. 15). The drill drive 71 is adapted to control the drill's rotatable shaft 70 and, thereby, the drill 68. The drill 68 may be directly coupled or connected to the rotatable shaft 70 or, as illustrated, via a drill chuck 72.

The positioning device 66 (also referred to a second positioning device, particularly in the introduction of the description and the claims) comprises first horizontal movement device 74, a second horizontal movement device 76 and a vertical movement device 78.

The first horizontal movement device 74 comprises two rails 80 and a slide 82.

The rails 80 extend in the direction H and, according to the drawings, do not extend beyond the support frame 6 in that direction. In such examples, the drill arrangement 64 can be moved only within the "footprint" of a plant removal apparatus in the direction H.

In further examples, the rails 80 may extend beyond the support frame 6 in direction H, so that the rails 80 protrude from the support frame 6 at the front of a plant removal apparatus, at the rear of a plant removal apparatus or at the front and the rear of a plant removal apparatus. In such examples, the drill arrangement 64 can be moved not only within the "footprint" of a plant removal apparatus in the direction H, but also to positions outside thereof. This allows to position the drill arrangement 64 in front of the front and/or rear of a plant removal apparatus. Such a positioning may be used to remove plants in front of and/or behind a plant removal apparatus. This may reduce the risk of damaging plants that are not to be removed, because the plant removal apparatus is not required to be moved into the area where a plant is to be removed.

The slide 82 can be moved along the rails 80. For the examples described above and illustrated in the preceding drawings, movements provided by the first horizontal movement device 74 are in the direction H.

The second horizontal movement device 76 comprises two rails 84 and a slide 86.

The rails 84 extend in the direction W and, according to the drawings, do not extend beyond the support frame 6 in that direction. In such examples, the drill arrangement 64 can moved only within the "footprint" of a plant removal apparatus in the direction W.

In further examples, the rails 84 may extend beyond the support frame 6 in direction W, so that the rails 84 protrude from the support frame 6 at the left of a plant removal apparatus, at the right of a plant removal apparatus or at the left and the right of a plant removal apparatus. In such examples, the drill arrangement 64 can be moved not only within the "footprint" of a plant removal apparatus in the direction W, but also to positions outside thereof. This allows to position the drill arrangement 64 beside a plant removal apparatus. Such a positioning may be used to remove plants on either side a plant removal apparatus. This may reduce the risk of damaging plants that are not to be removed, because the plant removal apparatus is not required to be moved into the area where a plant is to be removed.

This also allows removing plants at a side of the plant removal apparatus, e.g., if being moved between plant rows. In such cases, the drill arrangement 64 can be moved and/or positioned beyond the "footprint" of the plant removal apparatus and, hence, can remove plants sideways thereof. This may be particularly helpful in cases of higher plants, where the plant removal apparatus cannot be moved above the plants, but is moved therebetween. Then, the "side-weeding" can be performed without interfering with high plants. This also applies to examples using, in addition or as alternative, a plant removal device of a first type described in greater details further below.

The slide 86 can be moved along the rails 84. For the examples described above and illustrated in the preceding drawings, movements provided by the second horizontal movement device 76 are in the direction W.

The vertical movement device 78 is adapted to move the drill arrangement 64 perpendicular to the plane defined by the direction of movement provided by the first horizontal movement device 74 and the direction of movement provided by the second horizontal movement device 76. For the examples described above and illustrated in the preceding drawings, such movements provided by the vertical movement device 78 are in the direction V.

The vertical movement device 78 can use, like in the first and second horizontal movement devices, a rail-slide arrangement, where the drill arrangement may be connected to a slide and be moved along rails. In other examples, the vertical movement device 78 may include a linearly operating actuator acting on the drill arrangement.

Examples of possible actuation device for the vertical movement device 78 in Figs. 12 and 13.

In Fig. 12, a vertical movement device 78 is coupled with a drill arrangement 64. The illustrated vertical movement device 78 comprises a rod 88, referred to a plunger rod 88 due to its function as explained in the following. At one end, the plunger rod 88 coupled to a drive wheel 90. On its other hand, the plunger rod 88 is coupled to the drill arrangement 64. In such examples, the drill arrangement 64 may be arranged in a casing/housing 92 or other structures that limit movements of the drill arrangement 64 in radial direction. To position the drill arrangement 64 vertically, the drive wheel 90 is rotated, whereby the plunger rod 88 is moved, depending on the rotation of the drive wheel, upwards or downwards. Such movement of the plunger rod 88 moves the drill arrangement 64 up or down. In other words, the arrangement of 12 can be considered as reciprocating "engine".

In Fig. 13, a vertical movement device 78 is coupled with a drill arrangement 64. The illustrated vertical movement device 78 comprises shear-like arrangement 94 being, at an end, coupled with a free leg 96 to a support 98 and having another free leg 100 at which forces can be applied to the shear-like arrangement 94. At the other end, the shear-like arrangement 94 is connected to the drill arrangement 64. By applying force at free leg 100 in, according to the drawing, left or right direction as indicated by arrow 102, the drill arrangement 64 can be moved up or down.

In further examples, the vertical movement device 78 may provide at least one rotational degree of freedom.

As indicated in Fig. 11, the drill 68 has a longitudinal axis LAD generally extending in direction V. For operation, is rotated about its longitudinal axis LAD by rotating the rotatable shaft 70 by means of a drill drive 71. The vertical movement device 78 may be adapted to be rotated about the longitudinal axis LAD of the drill 68. In Fig. 11, this indicated by arrows RDOF1. This allows to rotate the drill 68 independent from a drill rotation by rotating the rotatable shaft 70. Rotation RDOF1 may be used to position the drill 68 before operation (e.g. in order to position cutting edge(s) of the drill before plant removal) and/or to release the drill 68 when being stuck in agricultural terrain (e.g. drill is deadlocked in soil).

In order to enable drilling in a direction deviating from the direction V, the vertical movement device 78 may be rotatable in such a manner that the longitudinal axis LAD of the drill 68 is tilted with respect to the direction V. In Fig. 11, this is indicated by arrows RDOF2.

In Fig. 11, the dashed lines indicate such tilted orientations of the longitudinal axis LADinc of the drill 68.

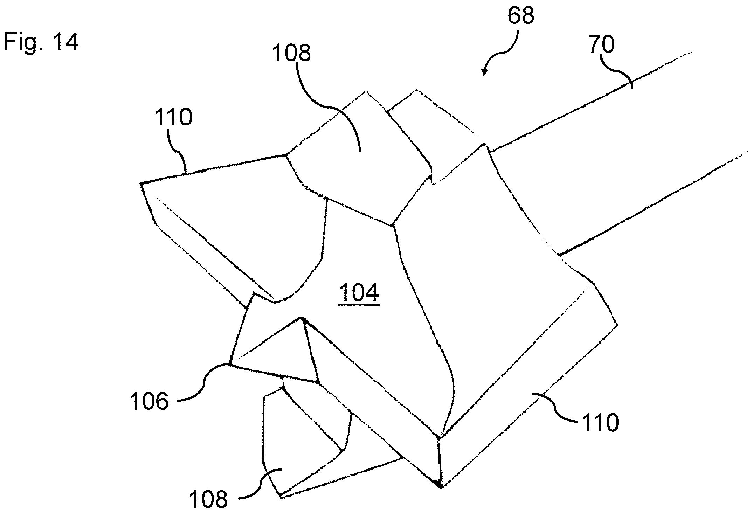

Fig. 14 illustrates an exemplary for a plant removal device of having a drill arrangement 64. The drill 68 has or is connected to a drill shaft 70 and a drill head 104. The drill head 104 has a cutting tip 106 providing a point angle, which may be adapted for agricultural terrain having a soil surface. Depending on the condition of the surface of agricultural terrain, drill having a larger or smaller point angle may be provided.

The drill 68 may have at least one cutting edge 108 having a shape supporting drill action into agricultural terrain, for example if a plant to be removed is removed by drilling into the plant, its roots and surrounding soil. However, cutting edge 108 may also support plant removal action where a plant to be removed is removed by cutting action. A cutting action by means of a drill of a drill arrangement according to the present disclosure indicates a movement of the drill essential perpendicular to its longitudinal axis (at least not along its longitudinal axis as in the case of drilling) so that the cutting on the circumference of the drill. Thus, cutting action can be also referred to as milling action.

The drill 68 may have at least one cutting edge 110 having a shape supporting cutting or milling action.

The above combination of cutting edge(s) 108 and cutting edge(s) 110 allows to perform drilling and cutting/milling action for plant removal. It is noted that cutting/milling action may be used above agricultural terrain to remove parts of a plant above the agricultural terrain and extending therefrom, respectively. However, cutting/milling action may be used also when the drill is going to penetrate or has also penetrated agricultural terrain. Then, cutting/milling action may be used to remove parts of plant below the surface of the agricultural terrain.

Fig. 15 schematically illustrates examples of exemplary drill actions and arrangements.

Fig. 15A illustrates an operation of a drill arrangement 64 to remove a plant by drilling action where the drill 68 is rotated about and moved along its longitudinal axis. In Fig. 15A, this indicated by rotation DR indicating a rotation of the drill 68 about its longitudinal axis and movement DM of the drill 68 along its longitudinal axis. Such drilling action may be used to drill into the parts of a plant P above agricultural terrain up to a position or location where a stem of a plant P enter the agricultural terrain. Such drilling action may be also used to drill further down, particularly beneath the surface of the agricultural terrain to drill into parts of plant P extending into the agricultural terrain (e.g. roots).
Fig. 15B illustrates an operation of a drill arrangement to remove a plant by cutting/milling action where the drill 68 is rotated about and moved perpendicular to its longitudinal axis. In Fig. 15A, this indicated by rotation DR indicating a rotation of the drill 68 about its longitudinal axis and movement CM of the drill 68 perpendicular its longitudinal axis. Such cutting/milling action may be used to cut away the parts of a plant P above agricultural terrain up to a position or location where a stem of a plant P enter the agricultural terrain. Such cutting/milling may be also used to cut part of a plant P underneath the surface of agricultural terrain.

In further examples, the drilling action of Fig. 15A and the cutting/milling action of Fig. 15B may be carried out simultaneously.

Fig. 15C illustrates a drill arrangement 64 comprising a drill 68 in form of a wing-type drill. A wing-type drill is considered as drill having at least one drill wing 112 with one or more cutting edges. The drill wing 112 is movably with respect to the longitudinal axis of the drill 68 and the drill rotatable shaft 70, particularly in such a manner that, upon rotation DR of the drill 68 about its longitudinal axis, the drill wing 112 deploys as indicated by arrow 114. For operation, the drilling action of Fig. 15A and/or the cutting/milling action of Fig. 15B may be carried out.

Fig. 15D illustrates a drill arrangement 64 comprising a drill 68 in form of a drum-type drill. The circumferential surface of the drum-type drill is (at least partially) equipped with one or more cutting edges. For operation, the drum-type drill is also rotated about its longitudinal axis LAD. However, for drilling action, the drum-type drill is moved perpendicular to its longitudinal axis, while for cutting/milling action, the drum-type drill is moved along its longitudinal axis apart from that the differences, the above observations with respect to the Figs. 15A and 15B correspondingly apply here.

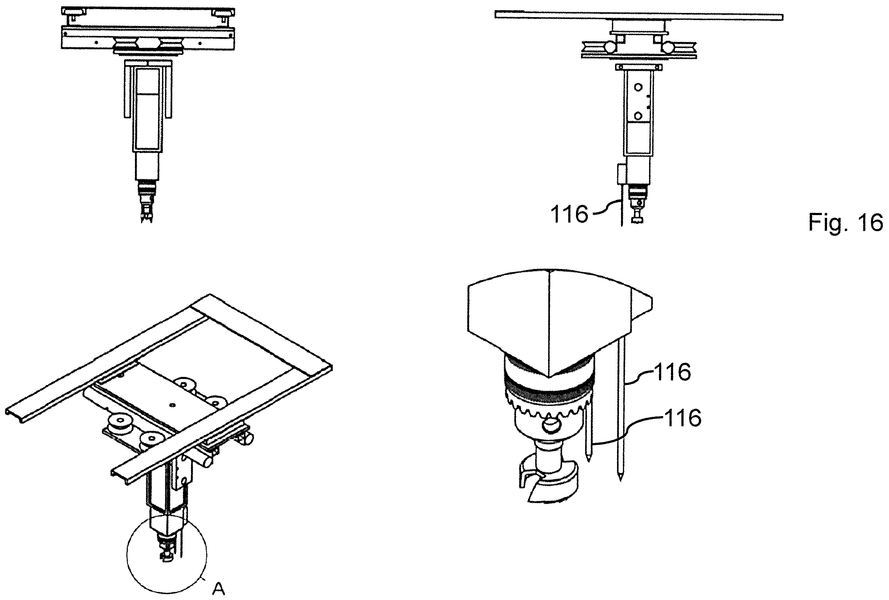

Fig. 16 schematically illustrates a further example of an exemplary drill arrangement comprising one or more sensors 116. As illustrated a sensor 116 can be arranged adjacent the rotatable shaft 70 or drill chuck 72 of drill 68 to extend close proximity to the drill 68 and its head, respectively, and/or at relatively more remote location (e.g. at a housing of the drill arrangement 64 or a vertical movement device 78 so that the sensor is spaced from the drill 68 and its head, respectively.

Examples of possible sensors include at least one a ground parameter measurement sensor being adapted to measure one or more parameters associated to the agricultural terrain, particularly temperature, humidity, soil nutrients (e.g. nitrogen, potassium, phosphate and their salts), soil organic matter, and the like; a distance sensor, an optical sensor, a camera (or fiber optics coupled to a camera).

In some examples, the sensor(s) can retracted or moved in other manner in such a way that they are not damaged during weeding. For example, before or during using the drill arrangement 64, the sensor(s) is retracted in order to avoid contact thereof with plants, ground, and/or other objects on the agricultural terrain, as well as providing some degree of self-cleaning.

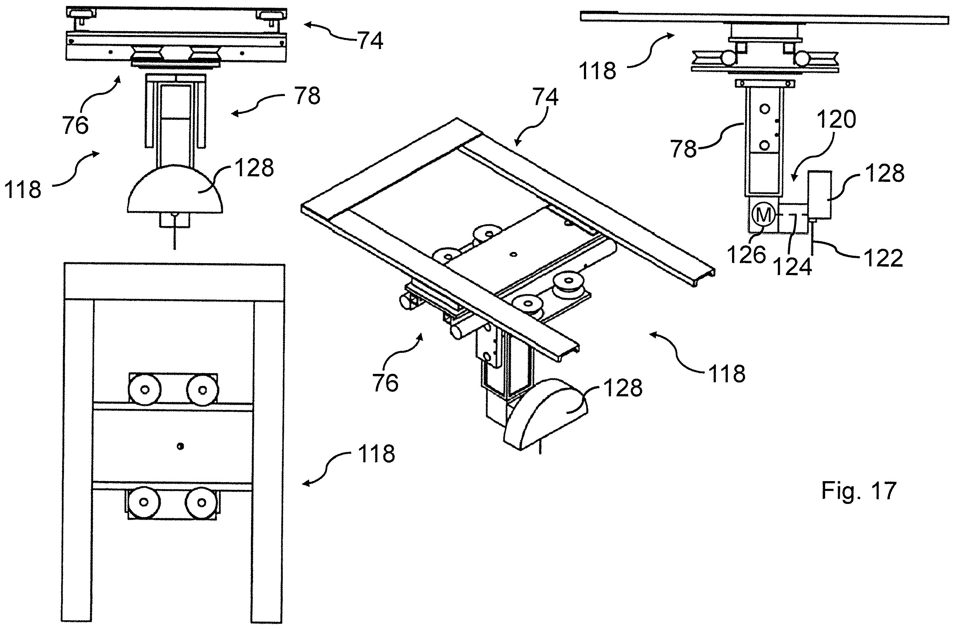

Fig. 17 schematically illustrates an exemplary plant removal device of a first type, particularly an exemplary plant removal device 118 comprising a spinning wire arrangement 120 and a positioning device.

As regards the positioning device of the plant removal device 118, positioning device 66 may be used, as illustrated. In such examples, the above observations with respect to the first horizontal movement device 74, the second horizontal movement device 76 and the vertical movement device 78 correspondingly apply here.

The spinning wire arrangement 120 comprises a spinning wire 122 being coupled to a rotatable shaft 124. By rotation of the rotatable shaft 124 by means of a spinning wire drive 126, the spinning wire 122 may be rotated about a rotation axis in the plane defined by the direction H and the direction W. In other words, the spinning plane of the spinning wire 122 extends in the direction V. In examples where the vertical movement device 78 provides the rotational degree of freedom RDOF2 (s. Fig. 11), the spinning plane of the spinning wire 122 can be inclined with respect to the direction V and/or with respect to a surface of the agricultural terrain.

In examples where the vertical movement device 78 provides the rotational degree of freedom RDOF1 (s. Fig. 11), the spinning plane of the spinning wire 122 can be rotated with respect to the direction V.

The spinning wire arrangement 120 may comprise a spinning wire protection device 128. The spinning wire protection device 128 accommodates a part of the spinning plane of the spinning wire 122, particularly in such a manner that the part of the spinning plane of the spinning wire 122 not being accommodated spinning wire protection device 128 is sufficiently large that, during rotation, the spinning wire 122 extends out of the spinning wire protection device 128 far enough to allow cutting of a plant.

The spinning wire protection device 128 does not only protect the spinning wire 122, but also plant no to be removed. For example, the spinning wire protection device 128 can be used to push away such plants by moving the spinning wire arrangement by means of the positioning device accordingly.

In the example of Fig. 16, the spinning plane of the spinning wire 122 extends at one side from the spinning wire protection device 128.

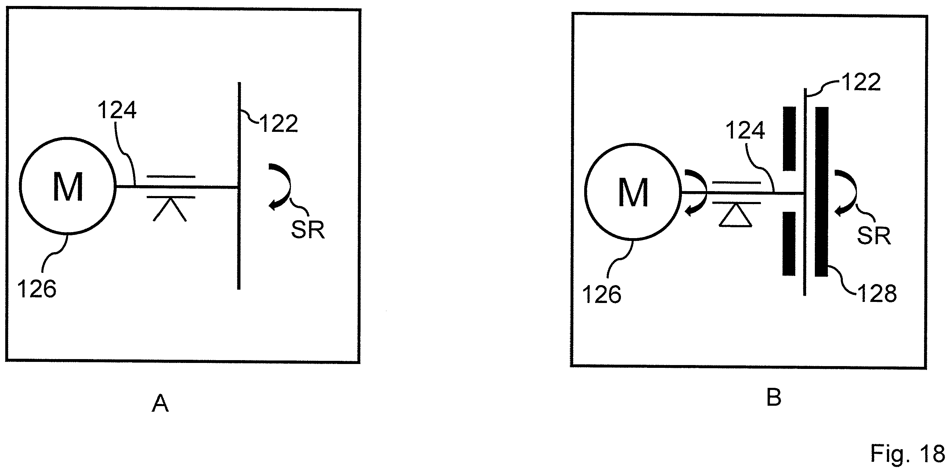

Further exemplary spinning wire arrangements are illustrated in Fig. 18.

Fig. 18A illustrates a spinning wire arrangement without spinning wire protection device 128, where the spinning wire 122 is exposed throughout the spinning plane when being rotated as indicated by arrow SR.

Fig. 18B illustrates a spinning wire arrangement with spinning wire protection device 128 that accommodates a radially inner part of the spinning plane of the spinning wire 122 so that the free end of the spinning wire 122 when being rotated SR continuously extends out of the spinning wire protection device 128 .

As set forth above, a plant removal apparatus may include one (or more) plant removal devices 10 of a first type, one (or more) plant removal devices 118 of a second type and both one (or more) plant removal devices of a first type 10 and one (or more) plant removal devices 118 of a second type.

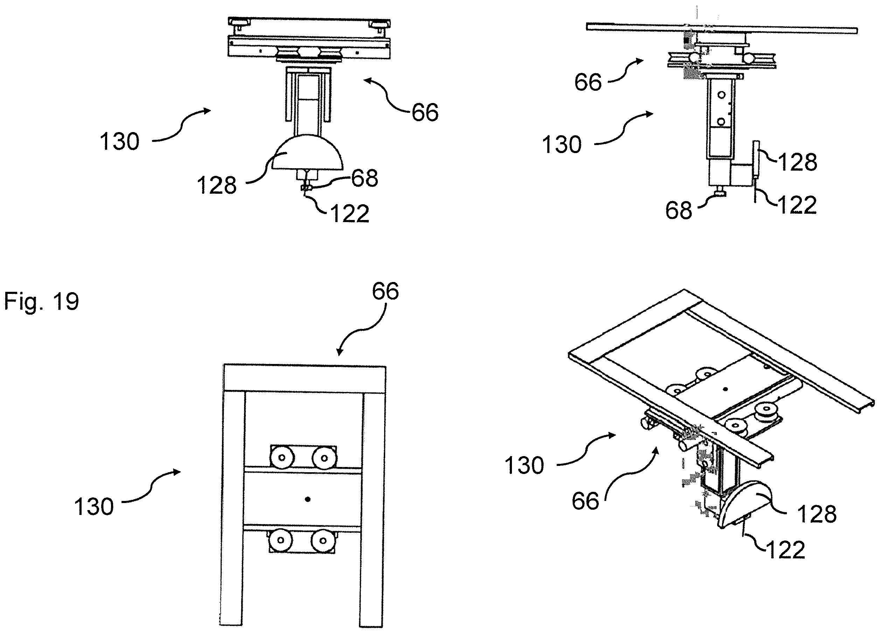

Fig. 19 schematically illustrates an example of an exemplary plant removal device 130 integrally comprising a plant removal device of a second type (particularly with a drill arrangement 64) and a plant removal device of a first type (particularly with a spinning wire arrangement 120).

As regards, the plant removal device comprising a drill arrangement, the above observations with respect to the plant removal device 10 correspondingly apply here.

As regards, the plant removal device comprising a spinning wire arrangement, the above observations with respect to the plant removal device 120 correspondingly apply here.

The above observations with respect to the positioning device 66 also apply to the positioning device 66 of the plant removal device 130. However, in the plant removal device 130 the positioning device 66 moves and positions both the drill arrangement 64 and the spinning wire arrangement 120.

In examples according to Fig. 19, the drill arrangement 64 and the spinning wire arrangement 120 may use separate drives as described above.

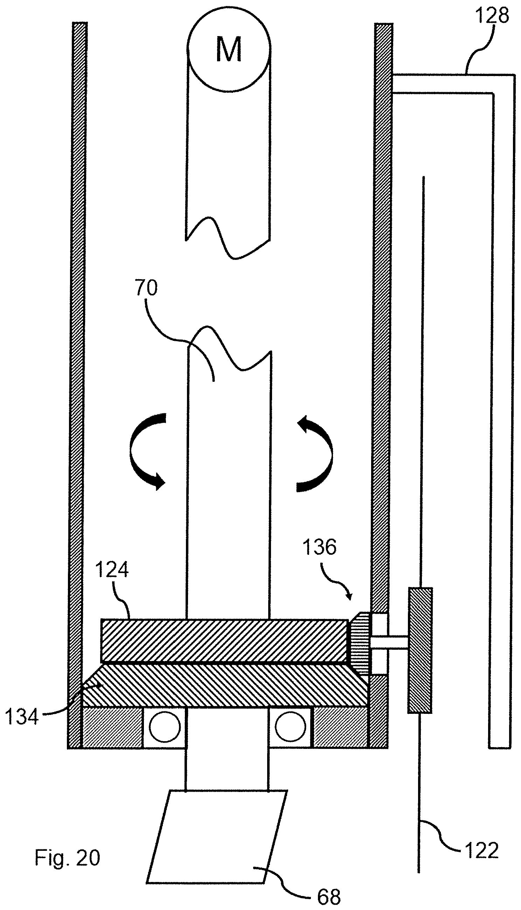

Fig. 20 illustrates a further example for driving the drill arrangement 64 and the spinning wire arrangement 120. A common drive 132 for the drill 68 and the spinning wire 122. The common drive may be coupled to the rotatable shaft 70 of the drill 68 to rotate the drill. The rotatable shaft 70 coupled with a gear wheel 134 intermeshed with gear wheel 136 being coupled with the rotatable shaft 124 for the spinning wire 122.

Upon activation of common drive 132, the rotatable shaft 70 is rotated and, hence, the drill 68 and the gear wheel 134. Due to the intermesh with the gear wheel 136, the rotation of the gear wheel 134 also rotates the rotatable shaft 124 and, hence, the spinning wire 122.

The ratio of a rotational speed of the drill 68 and a rotational speed of the spinning wire 122 can be adjusted by the gear ratio of the gear wheel 134 and the gear wheel 136. In further examples, a gearbox or transmission with controllable gear ratio may be used to couple the rotatable shaft 70 and the rotatable shaft 124.

## Claims

1. Plant removal apparatus for removing or at least reducing plant from an agricultural terrain, the apparatus comprising:
- a plant detection device comprising
-- a pattern recognition part being adapted to detect plants, to discriminate a plant to be removed among the detected plants and to output plant identification data indicating the plant to be removed, and
-- a plant position detection part being adapted to detect positions of plants detected by the pattern recognition part and to output plant position data indicating positions of the detected plants;
the apparatus further comprising at least one of
- at least one plant removal device of a first type, comprising
-- a spinning wire arrangement comprising a spinning wire and first rotatable shaft for rotating the spinning wire, the spinning wire being coupled to the first rotatable shaft;
-- a spinning wire drive being operatively coupled to the first rotatable shaft and being adapted to controllably rotate the first rotatable shaft;
-- a first positioning device being operatively coupled to the first rotatable shaft and being adapted to position the spinning wire arrangement in at least one translational degrees of freedom and in at least one rotational degree of freedom; and
- at least one plant removal device of a second type, comprising
-- a drill arrangement comprising a drill and second rotatable shaft for rotating the drill, the drill being coupled to the second rotatable shaft;
-- a drill drive being operatively coupled to the second rotatable shaft and being adapted to controllably rotate the second rotatable shaft;
-- a second positioning device being operatively coupled to the second rotatable shaft and being adapted to position the drill arrangement in at least one translational degrees of freedom;
the apparatus further comprising
- a control device being operatively coupled to and being adapted to control the at least one plant removal device of a first type and the at least one plant removal device of a second type, the control device being adapted to process output of the plant detection device to obtain plant removal data identifying plant to be removed and a removal position of identified plant to be removed, to selectively activate at least one of the at least one plant removal device of a first type and the at least one plant removal device of a second type for removal of the identified plant to be removed at the removal position.

2. Plant removal apparatus of claim 1, wherein at least one of the first positioning device and the second positioning device comprises a first horizontal movement device being adapted to move the respective plant removal device in a first horizontal direction, the first horizontal direction being perpendicular to a direction of movement of the plant removal apparatus.

3. Plant removal apparatus of claim 1 or 2, wherein the first horizontal movement device comprises a rail-slide arrangement extending beyond a width of the plant removal device

4. Plant removal apparatus of one of the claims 1 to 3, wherein at least one of the first positioning device and the second positioning device comprises a vertical movement device being adapted to move the at least one plant removal device in a vertical direction.

5. Plant removal apparatus of one of the claims 1 to 4, wherein at least one of the first positioning device and the second positioning device a second horizontal movement device being adapted to move the at least one plant removal device in a second horizontal direction being parallel to a direction of movement of the plant removal apparatus.

6. Plant removal method of removing or at least reducing plant from an agricultural terrain, the method comprising:
- detecting plants on the agricultural terrain,
- discriminating a plant to be removed among the detected plants,
- outputting plant identification data indicating the plant to be removed,
- detecting positions of plants detected,
- outputting plant position data indicating positions of the detected plants,
- selectively activating at least one of a first plant removal device and a second plant removal device for removal of the identified plant to be removed at the removal position, wherein
- the plant removal device of a first type comprises
-- a spinning wire arrangement comprising a spinning wire and first rotatable shaft for rotating the spinning wire, the spinning wire being coupled to the first rotatable shaft;
-- a spinning wire drive being operatively coupled to the first rotatable shaft and being adapted to controllably rotate the first rotatable shaft;
-- a first positioning device being operatively coupled to the first rotatable shaft and being adapted to position the spinning wire arrangement in at least one translational degrees of freedom and in at least one rotational degree of freedom; and
- the plant removal device of a second type comprises
-- a drill arrangement comprising a drill and second rotatable shaft for rotating the drill, the drill being coupled to the second rotatable shaft;
-- a drill drive being operatively coupled to the second rotatable shaft and being adapted to controllably rotate the second rotatable shaft;
-- a second positioning device being operatively coupled to the second rotatable shaft and being adapted to position the drill arrangement in at least one translational degrees of freedom.

7. The method of claim 6, wherein at least one of the spinning wire and the drill is moved in a first horizontal direction being perpendicular to a direction of movement of the plant removal apparatus, wherein preferably the at least one of the spinning wire and the drill is moved beyond a width of the plant removal device

8. The method of claim 6 or 7, wherein at least one of the spinning wire and the drill is moved in a vertical direction.

9. The method of one of the claims 6 to 8, wherein at least one of the spinning wire and the drill is moved in a second horizontal direction being parallel to a direction of movement of the plant removal apparatus.

10. Computer program product comprising program code configured to, when executed by a computing device, to carry out the steps as set defined in one of the method claims 6 to 9.

## Amended claims

### Amended claims in accordance with Rule 137(2) EPC.

**1.** Plant removal apparatus for removing or at least reducing plant from an agricultural terrain, the apparatus comprising:
- a plant detection device (10) comprising
-- a pattern recognition part being adapted to detect plants, to discriminate a plant to be removed among the detected plants and to output plant identification data indicating the plant to be removed, and
-- a plant position detection part being adapted to detect positions of plants detected by the pattern recognition part and to output plant position data indicating positions of the detected plants to be removed;
the apparatus further comprising at least one of
(A)
- at least one plant removal device (10) of a first type, comprising
-- a spinning wire arrangement (120) comprising a spinning wire (122) and first rotatable shaft (124) for rotating the spinning wire, the spinning wire (122) being coupled to the first rotatable shaft (124);
-- a spinning wire drive (126) being operatively coupled to the first rotatable shaft (124) and being adapted to controllably rotate the first rotatable shaft (124);
-- a first positioning device (74, 76) being operatively coupled to the first rotatable shaft (124) and being adapted to position the spinning wire arrangement (120) in at least one translational degrees of freedom and in at least one rotational degree of freedom;
and
(B)
- at least one plant removal device (10) of a second type, comprising
-- a drill arrangement (64) comprising a drill (68) and second rotatable shaft (70) for rotating the drill (68), the drill (68) being coupled to the second rotatable shaft (70);
-- a drill drive (74) being operatively coupled to the second rotatable shaft (70) and being adapted to controllably rotate the second rotatable shaft (70);
-- a second positioning device (78) being operatively coupled to the second rotatable shaft (70) and being adapted to position the drill arrangement (64) in at least one translational degrees of freedom;
the apparatus further comprising
- a control device being operatively coupled to and being adapted to control the at least one plant removal device of a first type and the at least one plant removal device of a second type, the control device being adapted to process the output of the plant detection part to obtain plant removal data identifying plants to be removed and a removal position of identified plant to be removed, to selectively activate at least one of the at least one plant removal device of a first type and the at least one plant removal device of a second type for removal of the identified plant to be removed at the removal position.

**2.** Plant removal apparatus of claim 1, wherein at least one of the first positioning device (74, 76) and the second positioning device (78) comprises a first horizontal movement device (74) being adapted to move the respective plant removal device in a first horizontal direction, the first horizontal direction being perpendicular to a direction of movement of the plant removal apparatus.

**3.** Plant removal apparatus of claim 1 or 2, wherein the first horizontal movement device (74) comprises a rail-slide arrangement extending beyond a width of the plant removal device

**4.** Plant removal apparatus of one of the claims 1 to 3, wherein at least one of the first positioning device (74, 76) and the second positioning device (78) comprises a vertical movement device being adapted to move the at least one plant removal device in a vertical direction.

**5.** Plant removal apparatus of one of the claims 1 to 4, wherein at least one of the first positioning device and the second positioning device a second horizontal movement device being adapted to move the at least one plant removal device in a second horizontal direction being parallel to a direction of movement of the plant removal apparatus.

**6.** Plant removal method of removing or at least reducing plant from an agricultural terrain, the method comprising:
- detecting plants on the agricultural terrain,
- discriminating a plant to be removed among the detected plants,
- outputting plant identification data indicating the plant to be removed,
- detecting positions of plants detected,
- outputting plant position data indicating positions of the detected plants,
- selectively activating at least one of a plant removal device of a first type and a plant removal device of a second type for removal of the identified plant to be removed at the removal position, wherein
- the plant removal device of a first type comprises
-- a spinning wire arrangement comprising a spinning wire and first rotatable shaft for rotating the spinning wire, the spinning wire being coupled to the first rotatable shaft;
-- a spinning wire drive being operatively coupled to the first rotatable shaft and being adapted to controllably rotate the first rotatable shaft;
-- a first positioning device being operatively coupled to the first rotatable shaft and being adapted to position the spinning wire arrangement in at least one translational degrees of freedom and in at least one rotational degree of freedom; and
- the plant removal device of a second type comprises
-- a drill arrangement comprising a drill and second rotatable shaft for rotating the drill, the drill being coupled to the second rotatable shaft;
-- a drill drive being operatively coupled to the second rotatable shaft and being adapted to controllably rotate the second rotatable shaft;
-- a second positioning device being operatively coupled to the second rotatable shaft and being adapted to position the drill arrangement in at least one translational degrees of freedom.

**7.** The method of claim 6, wherein at least one of the spinning wire and the drill is moved in a first horizontal direction being perpendicular to a direction of movement of the plant removal apparatus, wherein preferably the at least one of the spinning wire and the drill is moved beyond a width of the plant removal device

**8.** The method of claim 6 or 7, wherein at least one of the spinning wire and the drill is moved in a vertical direction.

**9.** The method of one of the claims 6 to 8, wherein at least one of the spinning wire and the drill is moved in a second horizontal direction being parallel to a direction of movement of the plant removal apparatus.

**10.** Computer program product comprising program code configured to, when executed by a computing device, to carry out the steps as set defined in one of the method of one of the claims 6 to 9.

**1.** Plant removal apparatus for removing or at least reducing plant from an agricultural terrain, the apparatus comprising:
- a plant detection device (10) comprising
-- a pattern recognition part being adapted to detect plants, to discriminate a plant to be removed among the detected plants and to output plant identification data indicating the plant to be removed, and
-- a plant position detection part being adapted to detect positions of plants detected by the pattern recognition part and to output plant position data indicating positions of the detected plants to be removed;
the apparatus further comprising
- at least one plant removal device (10) of a second type, comprising
-- a drill arrangement (64) comprising a drill (68) and second rotatable shaft (70) for rotating the drill (68), the drill (68) being coupled to the second rotatable shaft (70);
-- a drill drive (74) being operatively coupled to the second rotatable shaft (70) and being adapted to controllably rotate the second rotatable shaft (70);
-- a second positioning device (78) being operatively coupled to the second rotatable shaft (70) and being adapted to position the drill arrangement (64) in at least one translational degrees of freedom;
the apparatus further comprising
- a control device being operatively coupled to and being adapted to control the at least one plant removal device of a second type, the control device being adapted to process the output of the plant detection part to obtain plant removal data identifying plants to be removed and a removal position of identified plant to be removed, to selectively activate the at least one plant removal device of a second type for removal of the identified plant to be removed at the removal position.

**2.** Plant removal apparatus of claim 1, further comprising
- at least one plant removal device (10) of a first type, comprising
-- a spinning wire arrangement (120) comprising a spinning wire (122) and first rotatable shaft (124) for rotating the spinning wire, the spinning wire (122) being coupled to the first rotatable shaft (124);
-- a spinning wire drive (126) being operatively coupled to the first rotatable shaft (124) and being adapted to controllably rotate the first rotatable shaft (124);
-- a first positioning device (74, 76) being operatively coupled to the first rotatable shaft (124) and being adapted to position the spinning wire arrangement (120) in at least one translational degrees of freedom and in at least one rotational degree of freedom;
Wherein
the control device is operatively coupled to and being adapted to control the at least one plant removal device of a first type and the at least one plant removal device of a second type, the control device being adapted to process the output of the plant detection part to obtain plant removal data identifying plants to be removed and a removal position of identified plant to be removed, to selectively activate at least one of the at least one plant removal device of a first type and the at least one plant removal device of a second type for removal of the identified plant to be removed at the removal position.

**3.** Plant removal apparatus of one of the claim 1 or 2, wherein at least one of the first positioning device (74, 76) and the second positioning device (78) comprises a first horizontal movement device (74) being adapted to move the respective plant removal device in a first horizontal direction, the first horizontal direction being perpendicular to a direction of movement of the plant removal apparatus.

**4.** Plant removal apparatus of one of the claims 1 to 3, wherein the first horizontal movement device (74) comprises a rail-slide arrangement extending beyond a width of the plant removal device

**5.** Plant removal apparatus of one of the claims 1 to 4, wherein at least one of the first positioning device (74, 76) and the second positioning device (78) comprises a vertical movement device being adapted to move the at least one plant removal device in a vertical direction.

**6.** Plant removal apparatus of one of the claims 1 to 5, wherein at least one of the first positioning device and the second positioning device a second horizontal movement device being adapted to move the at least one plant removal device in a second horizontal direction being parallel to a direction of movement of the plant removal apparatus.

**7.** Plant removal method of removing or at least reducing plant from an agricultural terrain, the method comprising:
- detecting plants on the agricultural terrain,
- discriminating a plant to be removed among the detected plants,
- outputting plant identification data indicating the plant to be removed,
- detecting positions of plants detected,
- outputting plant position data indicating positions of the detected plants,
- selectively activating a plant removal device of a second type for removal of the identified plant to be removed at the removal position, wherein
- the plant removal device of a second type comprises
-- a drill arrangement comprising a drill and second rotatable shaft for rotating the drill, the drill being coupled to the second rotatable shaft;
-- a drill drive being operatively coupled to the second rotatable shaft and being adapted to controllably rotate the second rotatable shaft;
-- a second positioning device being operatively coupled to the second rotatable shaft and being adapted to position the drill arrangement in at least one translational degrees of freedom.

**8.** Plant removal method of claim 7, the method further comprising:
- selectively activating at least one of a plant removal device of a first type and the plant removal device of a second type for removal of the identified plant to be removed at the removal position, wherein
- the plant removal device of a first type comprises
-- a spinning wire arrangement comprising a spinning wire and first rotatable shaft for rotating the spinning wire, the spinning wire being coupled to the first rotatable shaft;
-- a spinning wire drive being operatively coupled to the first rotatable shaft and being adapted to controllably rotate the first rotatable shaft;
-- a first positioning device being operatively coupled to the first rotatable shaft and being adapted to position the spinning wire arrangement in at least one translational degrees of freedom and in at least one rotational degree of freedom.

**9.** The method of claim 7 or 8, wherein at least one of the spinning wire and the drill is moved in a first horizontal direction being perpendicular to a direction of movement of the plant removal apparatus, wherein preferably the at least one of the spinning wire and the drill is moved beyond a width of the plant removal device

**10.** The method of one of the claims 7 to 9, wherein at least one of the spinning wire and the drill is moved in a vertical direction.

**11.** The method of one of the claims 7 to 10, wherein at least one of the spinning wire and the drill is moved in a second horizontal direction being parallel to a direction of movement of the plant removal apparatus.

**12.** Computer program product comprising program code configured to, when executed by a computing device, to carry out the steps as set defined in one of the method of one of the claims 7 to 11.

**1.** Plant removal apparatus for removing or at least reducing plant from an agricultural terrain, the apparatus comprising:
- a plant detection device (10) comprising
-- a pattern recognition part being adapted to detect plants, to discriminate a plant to be removed among the detected plants and to output plant identification data indicating the plant to be removed, and
-- a plant position detection part being adapted to detect positions of plants detected by the pattern recognition part and to output plant position data indicating positions of the detected plants to be removed;
the apparatus further comprising
(A)
- at least one plant removal device (10) of a first type, comprising
-- a spinning wire arrangement (120) comprising a spinning wire (122) and first rotatable shaft (124) for rotating the spinning wire, the spinning wire (122) being coupled to the first rotatable shaft (124);
-- a spinning wire drive (126) being operatively coupled to the first rotatable shaft (124) and being adapted to controllably rotate the first rotatable shaft (124);
-- a first positioning device (74, 76) being operatively coupled to the first rotatable shaft (124) and being adapted to position the spinning wire arrangement (120) in at least one translational degrees of freedom and in at least one rotational degree of freedom;
and
(B)
- at least one plant removal device (10) of a second type, comprising
-- a drill arrangement (64) comprising a drill (68) and second rotatable shaft (70) for rotating the drill (68), the drill (68) being coupled to the second rotatable shaft (70);
-- a drill drive (74) being operatively coupled to the second rotatable shaft (70) and being adapted to controllably rotate the second rotatable shaft (70);
-- a second positioning device (78) being operatively coupled to the second rotatable shaft (70) and being adapted to position the drill arrangement (64) in at least one translational degrees of freedom;
the apparatus further comprising
- a control device being operatively coupled to and being adapted to control the at least one plant removal device of a first type and the at least one plant removal device of a second type, the control device being adapted to process the output of the plant detection part to obtain plant removal data identifying plants to be removed and a removal position of identified plant to be removed, to selectively activate at least one of the at least one plant removal device of a first type and the at least one plant removal device of a second type for removal of the identified plant to be removed at the removal position.

**2.** Plant removal apparatus of claim 1, wherein at least one of the first positioning device (74, 76) and the second positioning device (78) comprises a first horizontal movement device (74) being adapted to move the respective plant removal device in a first horizontal direction, the first horizontal direction being perpendicular to a direction of movement of the plant removal apparatus.

**3.** Plant removal apparatus of claim 1 or 2, wherein the first horizontal movement device (74) comprises a rail-slide arrangement extending beyond a width of the plant removal device

**4.** Plant removal apparatus of one of the claims 1 to 3, wherein at least one of the first positioning device (74, 76) and the second positioning device (78) comprises a vertical movement device being adapted to move the at least one plant removal device in a vertical direction.

**5.** Plant removal apparatus of one of the claims 1 to 4, wherein at least one of the first positioning device and the second positioning device a second horizontal movement device being adapted to move the at least one plant removal device in a second horizontal direction being parallel to a direction of movement of the plant removal apparatus.

**6.** Plant removal method of removing or at least reducing plant from an agricultural terrain, the method comprising:
- detecting plants on the agricultural terrain,
- discriminating a plant to be removed among the detected plants,
- outputting plant identification data indicating the plant to be removed,
- detecting positions of plants detected,
- outputting plant position data indicating positions of the detected plants,
- selectively activating a plant removal device of a first type and a plant removal device of a second type for removal of the identified plant to be removed at the removal position, wherein
- the plant removal device of a first type comprises
-- a spinning wire arrangement comprising a spinning wire and first rotatable shaft for rotating the spinning wire, the spinning wire being coupled to the first rotatable shaft;
-- a spinning wire drive being operatively coupled to the first rotatable shaft and being adapted to controllably rotate the first rotatable shaft;
-- a first positioning device being operatively coupled to the first rotatable shaft and being adapted to position the spinning wire arrangement in at least one translational degrees of freedom and in at least one rotational degree of freedom; and
- the plant removal device of a second type comprises
-- a drill arrangement comprising a drill and second rotatable shaft for rotating the drill, the drill being coupled to the second rotatable shaft;
-- a drill drive being operatively coupled to the second rotatable shaft and being adapted to controllably rotate the second rotatable shaft;
-- a second positioning device being operatively coupled to the second rotatable shaft and being adapted to position the drill arrangement in at least one translational degrees of freedom.

**7.** The method of claim 6, wherein at least one of the spinning wire and the drill is moved in a first horizontal direction being perpendicular to a direction of movement of the plant removal apparatus, wherein preferably the at least one of the spinning wire and the drill is moved beyond a width of the plant removal device

**8.** The method of claim 6 or 7, wherein at least one of the spinning wire and the drill is moved in a vertical direction.

**9.** The method of one of the claims 6 to 8, wherein at least one of the spinning wire and the drill is moved in a second horizontal direction being parallel to a direction of movement of the plant removal apparatus.

**10.** Computer program product comprising program code configured to, when executed by a computing device, to carry out the steps as set defined in one of the method of one of the claims 6 to 9.
